(19) Europäisches Patentamt
European Patent Office
Office européen des brevets

(11) **EP 0 583 043 B1**

(12) **EUROPEAN PATENT SPECIFICATION**

(45) Date of publication and mention
of the grant of the patent:
**04.11.1998 Bulletin 1998/45**

(51) Int Cl.6: **G10H 5/00**, G10H 1/00,
G10K 11/00, G10K 15/12

(21) Application number: **93202895.4**

(22) Date of filing: **29.04.1987**

(54) **Tone generation system**

Tonerzeugungssystem

Système générateur de son musical

(84) Designated Contracting States:
**DE FR GB IT NL SE**

(30) Priority: **02.05.1986 US 859868**
**17.10.1986 US 920701**

(43) Date of publication of application:
**16.02.1994 Bulletin 1994/07**

(62) Document number(s) of the earlier application(s) in
accordance with Art. 76 EPC:
**87303803.8 / 0 248 527**

(73) Proprietor: **THE BOARD OF TRUSTEES OF THE
LELAND STANFORD JUNIOR UNIVERSITY
Palo Alto, California 94306 (US)**

(72) Inventor: **Smith, Julius O.
Palo Alto, California 94306 (US)**

(74) Representative: **Dawson, Elizabeth Ann et al
A.A. THORNTON & CO.
Northumberland House
303-306 High Holborn
London WC1V 7LE (GB)**

(56) References cited:
**US-A- 3 967 099          US-A- 4 475 229**
**US-A- 4 548 119**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to the field of digital signal processing and particularly to signal processing useful in digital music synthesis and other applications.

Digital music synthesis (as known, for example, from US-A-4 548 119) has attracted increased interest as data processors have undergone new developments which provide increased performance capabilities. Digital music synthesis has many applications such as the synthesis of stringed, reed and other instruments and such as the synthesis of reverberation.

In actual practice, it has been difficult to provide satisfactory models of music instruments, based upon quantitative physical models, which can be practically synthesized on a real-time basis using present-day computers and digital circuitry.

Most traditional musical instruments, such as woodwinds and strings, have been simulated by additive synthesis which consists of summing together sinusoidal harmonics of appropriate amplitude, or equivalently by repeatedly reading from a table consisting of one period of a tone (scaled by an "amplitude function") to "play a note." Another method consists of digitally sampling a real musical sound, storing the samples in digital memory, and thereafter playing back the samples under digital control. FM synthesis as described, for example, in U.S. patent 4,018,121, has also been successful in synthesizing many musical sounds including brasses, woodwinds, bells, gongs, and some strings. A few instruments have been simulated by "subtractive synthesis" which shapes the spectrum of primitive input signals using digital filters.

All of the foregoing methods (with the occasional exception of subtractive synthesis) have the disadvantage of not being closely related to the underlying physics of sound production. Physically accurate simulations are expensive to compute when general finite-element modeling techniques are used.

Digital reverberation (as known e.g. from US-A-4 475 229) has also been difficult to achieve. Although digital music synthesis has employed digital reverberation as a post-processing function for many years, there still remains a need to be able to simulate with digital signal processing the quality of reverberation which exists in natural listening-space environments. The basic acoustics of reverberation in natural listening-space environments, such as concert halls, has a long history with many different design theories. The goal of digital reverberation is to produce digital signal processing methods which simulate the effect that a good concert hall or other good "listening space" has on sound. This goal is made difficult because typical good listening spaces are inherently large-order, complex acoustical systems which cannot be precisely simulated in real-time using commonly available computing techniques.

In architectural acoustics, an understanding of digital reverberation is important in the design of concert halls with good acoustical qualities. In digitally synthesized music, reverberation is a part of the synthesized instrumental ensemble and provides enrichment to the sound quality. For these reasons, there have been many attempts to capture the musically important qualities of natural reverberation in digital music synthesis.

Digital room simulation (reverberation) has been implemented by simulating specular reflection in actual or approximate concert-hall geometries. The diffusive scattering of sound in such natural listening environments must be considered in order to obtain high-quality reverberation models. However, practical models which accommodate diffusing reflections have been beyond the reach of present computing power when applied to listening spaces of nominal size over the audio frequency band.

In another implementation of digital reverberation, an approximation to the impulse response between two spatial points in a real concert hall has been recorded. The effect of the hall on sound between these two points can be accurately simulated by convolving the measured impulse response with the desired source signal. Again, this implementation leads to a prohibitive computational burden which is two to three orders of magnitude beyond the real-time capability of typical present-day mainframe computers.

The current state of high-quality digital reverberation based upon large (concert hall) spaces, although well understood, is too expensive to synthesize by computation. Because there is much detail in natural reverberation that is not important perceptually, models for reverberation need to be simplified so as to become computationally practical.

One example of a computationally simple model relies upon convolving unreverberated sound with exponentially decaying white noise thereby producing the heretofore best known artificial reverberation. The digital reverberator designs based upon quantitative physical models need to be replaced by models based upon simple computations which retain the qualitative behavior of natural listening space reverberation.

Some basic building blocks of presently known digital reverberators include cascaded and nested allpass networks, recursive and non-recursive comb filters, tapped delay lines, and lowpass filters. The early reflections can be exactly matched for a fixed source and listener position using a tapped delay line, and the late reverberation can be qualitatively matched using a combination of allpass chains, comb filters, and lowpass filters. Using a lowpass filter in the feedback loop of a comb filter simulates air absorption and nonspecular reflection. These known techniques for reverberation have been the basis for reverberation design for more than a decade. Although these elements do provide some essential aspects of reverberation, especially for smoothly varying sounds at low reverberation levels, they do not provide reverberation on a par with excellent natural listening-space environments.

In accordance with the above background, there is a need for techniques for synthesizing strings, winds, and other musical instruments optionally including reverberators in a manner which is both physically meaningful and computationally efficient. There is a need for the achievement of natural and expressive computer-controlled performance in ways which are readily comprehensible and easy to use.

The present invention provides a real time tone generation system characterised by:

means for providing a variable control signal for initiating and thereafter controlling generation of a tone;

wave transmission means for transmitting wave signals, the wave transmission means including an input and an output, a first signal path for receiving signals from the input, a second signal path for providing signals to the output, the first signal path being coupled to the second signal path, and delay means in at least one of the signal paths for delaying signals;

junction means having a first input for receiving the control signal, a second input for receiving a signal from the output of the wave transmission means and an output for providing a signal as the input to the wave transmission means which is a function of at least the value of the control signal and the value of the signal received from the output of the wave transmission means so as to cause a tone signal to propagate in the wave transmission means; and

tone signal extracting means for extracting a tone signal from at least one of the wave transmission means and junction means.

An embodiment of the present invention is a signal processor formed using digital waveguide networks. The digital waveguide networks have signal scattering junctions. A junction connects two waveguide sections together or terminates a waveguide. The junctions are constructed from conventional digital components such as multipliers, adders, and delay elements. The number of multiplies and additions determines the number of signal-scattering junctions that can be implemented in the waveguide network, and the number of delays determines the total delay which can be distributed among the waveguides interconnecting the junctions in the waveguide network. The signal processor is typically used for synthesis of reed, string or other instruments.

The waveguides used in the present invention may include a first rail for conducting signals from stage to stage in one direction and a second rail for conducting signals from stage to stage in the opposite direction. The accumulated delay along the first rail is preferably substantially equal to the accumulated delay along the second rail so that the waveguide is balanced. The first rail is connected to the second rail at junctions so that signals conducted by one rail are also conducted in part by the other rail.

Lossless waveguides which may be used in the present invention are bi-directional delay lines which sometimes include embedded allpass filters. Losses are introduced as pure attenuation or lowpass filtering in one or both directions.

The signal processor in some applications includes a non-linear junction connected to provide an input signal to the first rail of the waveguide and to receive an output signal from the second rail of the waveguide.

In one embodiment, a reed instrument is synthesized by a non-linear junction terminating a digital waveguide. A primary control variable, representing mouth pressure, is input to the non-linear junction (also controlled secondarily by embouchure variables). The junction simulates the reed while the digital waveguide simulates the bore of the reed instrument.

In another embodiment, a string instrument is synthesized. A primary control variable, representing the bow velocity, is input to the non-linear junction. The non-linear junction represents the bow-string interface (including secondary controls such as bow force, bow angle, bow position, and friction characteristics). In the stringed instrument embodiment, two digital lossless waveguides are connected to the non-linear junction. The first waveguide represents the long string portion (from the bow to the nut) and the other waveguide simulates the short string portion (from the bow to the bridge). A series of waveguides can also be used to implement the body of, for example, a violin, although in such a case there is normally no direct physical interpretation of the waveguide variables.

In particular embodiments, the reflection signal or signal coefficients introduced into the waveguides from the nonlinear junction are obtained from a table. In one embodiment, the nonlinearity to be introduced into the waveguides is $f(x)$ where $x$ is the table address and also the incoming signal sample in the waveguide (a travelling wave sample). In another embodiment, the values $g(x)=f(x)/x$ are stored in the table and the table is addressed by $x$. Each value of $g(x)$ addressed by $x$ from the compressed table (where $g(x)$ is called a coefficient) is then multiplied by $x$, $x*g(x)$ which thereby produces the desired value of $f(x)$.

In accordance with the above summary, the present invention captures the musically important qualities of natural instruments in digital music synthesis with digital processing techniques employing digital waveguides which are computationally efficient and therefore capable of inexpensive real-time operation.

The foregoing and other objects, features and advantages of the invention will be apparent from the following detailed description in conjunction with the drawings.

FIGURES 1 to 13 show, by way of example, optional components of tone generation systems according to the invention.

FIGURE 1 depicts a simple closed waveguide network;
FIGURE 2 depicts a 3-port waveguide network;
FIGURE 3 depicts a junction of two waveguides;
FIGURE 4 depicts a cascade waveguide network in accordance with the present invention;
FIGURE 5 depicts one embodiment of a cascade waveguide network section;
FIGURE 6 depicts another embodiment of a cascade waveguide network section;
FIGURE 7 depicts a third embodiment of a cascade waveguide network section;
FIGURE 8 depicts a pipelined embodiment of a waveguide filter;
FIGURE 9 depicts a travelling pressure wave at a general point within a waveguide section;
FIGURE 10 depicts a normalized-waveguide digital filter;
FIGURE 11 depicts a wave-normalized waveguide junction;
FIGURE 12 depicts a transformer junction;
FIGURE 13 depicts transformer-coupled waveguide junction;
FIGURE 14 depicts a tone generation system of the invention comprising a non-linear junction, controlled by a control variable, and connected through a plurality of ports to a plurality of waveguides;
FIGURE 15 depicts a tone generation system of the invention comprising terminating non-linear junction controlled by a control variable and connected to a waveguide network;
FIGURE 16 depicts further details of the non-linear junction of Figure 9;
FIGURE 17 depicts a block diagram representation of the waveguide of Figure 9;
FIGURE 18 depicts a non-linear junction connected to first and second waveguides;
FIGURE 19 depicts a waveguide reverberator;
FIGURE 20 depicts a typical waveguide employed in the Figure 19 reverberator;
FIGURE 21 depicts details of the Figure 20 waveguide;
FIGURE 22 is a signal processor forming a music instrument using digital waveguides.
FIGURE 23 is a graph of a waveform representing the data stored in the table of Figure 16 for a reed instrument;
FIGURE 24 is graph of a waveform representing the data stored in the table of figure 16 for a string instrument.

DETAILED DESCRIPTION

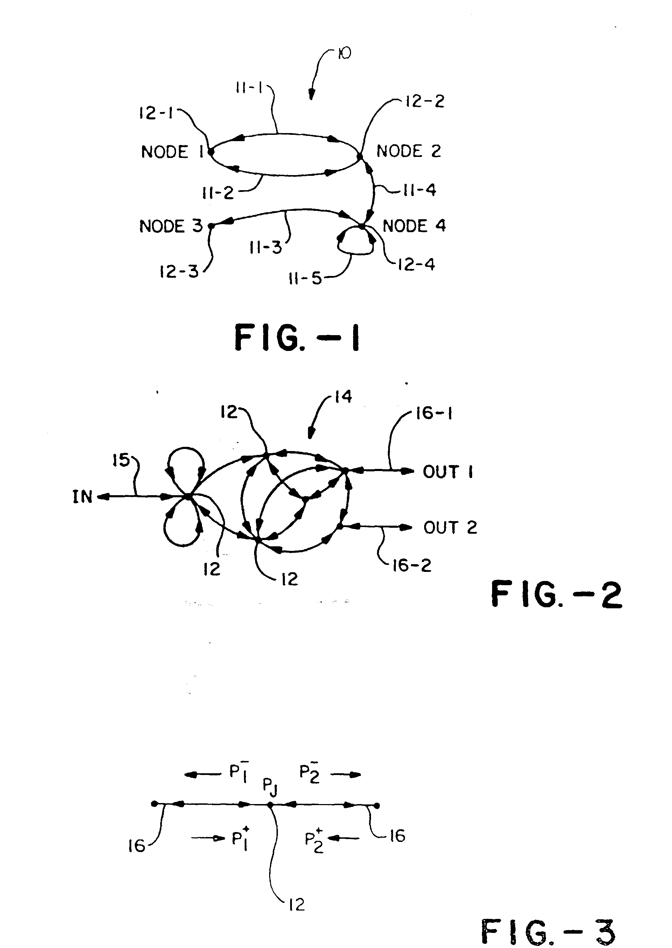

Lossless Networks - FIG. 1

In FIG. 1 a network 10 is a closed interconnection of bi-directional signal paths 11. The signal paths 11 are called branches or waveguides, designated 11-1, 11-2, 11-3, 11-4, and 11-5 and the interconnection points are called nodes or junctions, designated 12-1, 12-2, 12-3, and 12-4. An example of a simple network is shown in FIG. 1 where each signal path is bi-directional, meaning that in each waveguide there is a signal propagating in one direction and an independent signal propagating in the other direction. When a signal reaches a junction, one component is partially reflected back along the same waveguide, and other components are partially transmitted into the other waveguides connected to the junction. The relative strengths of the components of the transmitted or "scattered" signals at each junction are determined by the relative characteristic impedances of the waveguides at the junction. In FIG. 1, the waveguides 11 intersect at the junctions 12.

A lossless waveguide, such as each of the waveguides in FIG. 1, is defined specifically as a lossless bi-directional signal branch. In the simplest case, each branch or waveguide 11 in a waveguide network 10 is merely a bi-directional delay line. The only computations in the network take place at the branch intersection points (nodes or junctions). More generally, a lossless waveguide branch may contain a chain of cascaded allpass filters. For practical reverberator and other designs, losses are introduced in the form of factors less than 1 and/or low pass filters with a frequency response strictly bounded above by 1 in magnitude.

A closed lossless network preserves total stored signal energy. Energy is preserved if, at each time instant, the total energy stored in the network is the same as at any other time instant. The total energy at any time instant is found by summing the instantaneous power throughout the network waveguides 11. Each signal sample within the network contributes to instantaneous power. The instantaneous power of a stored sample is the squared amplitude times a scale factor, $g$. If the signal is in units of "pressure", "force", or equivalent, then $g = 1/Z$, where $Z$ is the characteristic impedance of the waveguide 11 medium. If the signal sample instead represents a "flow" variable, such as volume-velocity, then $g = Z$. In either case, the stored energy is a weighted sum of squared values of all samples stored in the digital network 10.

N-Port Network - FIG. 2

In FIG. 2, an N-port network 14 is shown in which for N=3, three waveguides, called ports, leave the network with one port 15 designated for input and two ports 16-1 and 16-2 designated for output. Such a structure is suitable, for example, for providing stereo reverberation of a single channel of sound. Note, however, that really in FIG. 2 there are three inputs(15, 16-1, 16-2) and three outputs (15, 16-1, 16-2) because in an N-port, each waveguide connected to the network provides both an input and an output since each waveguide is bi-directional.

An N-port network 14 of FIG. 2 is lossless if at any time instant, the energy lost through the outputs, equals the total energy supplied through the inputs, plus the total stored energy. A lossless digital filter is obtained from a lossless N-port by using every port as both an input and an output. This filter is the general multi-input, multi-output allpass filter.

An N-port network 14 is linear if superposition holds. Superposition holds when the output in response to the sum of two input signals equals the sum of the outputs in response to each individual input signal. A network is linear if every N-port derived from it is linear. Only linear networks can be restricted to a large and well-understood class of energy conserving systems.

Lossless Scattering - FIG. 3

Consider a parallel junction of N lossless waveguides of characteristic impedance $Z_i$ (characteristic admittance $r_i$ = $1/Z_i$) as depicted in FIG. 3 for N=2.

If in FIG. 3 the incoming traveling pressure waves are denoted hy $P_i^+$ where i = 1...,N, the outgoing pressure waves are given by Eq.(1) as follows:-

$$P_i^- = P_j - P_i^+ \qquad\qquad\qquad Eq.(1)$$

where $P_j$ in Eq.(1) is the resultant junction pressure given as follows:

$$P_j = \sum_{i=1}^{N} \alpha_i P_i^+$$

$$Eqs.(2)$$

where

$$\alpha_i = (2\Gamma_i) / (\sum_{\ell=1}^{N} \Gamma_\ell)$$

For N=2,

$$P_j = \alpha_1 P_1^+ + \alpha_2 P_2^+$$

$$\alpha_1 = (2\Gamma_1)/(\Gamma_1 + \Gamma_2)$$

$$\alpha_2 = 2 - \alpha_1$$

Define the reflection coefficient by $k=\alpha_1-1$, then from Eq. 1,

$$P_1^- = P_j - P_1^+$$

$$= (\alpha_1 - 1) P_1^+ + \alpha_2 P_2^-$$

$$P_1^- = kP_1^+ + (1 - k) P_2^+$$

$$P_2^- = \alpha_1 P_1^+ + (\alpha_2 - 1) P_2^+$$

$$P_2^- = (k + 1) P_1^+ - kP_2^+$$

Thus, we have, for N=2,

$$P_1^- = P_2^+ + k(P_1^+ - P_2^+)$$

$$P_2^- = P_1^+ + k(P_1^+ - P_2^+) \qquad \text{Eqs. (3)}$$

which is the one-multiplier lattice filter section (minus its unit delay). More generally, an N-way intersection requires N multiplies and N-1 additions to obtain $P_j$, and one addition for each outgoing wave, for a total of N multiplies and 2N-1 additions.

The series flow-junction is equivalent to the parallel pressure-junction. The series pressure-junction or the parallel flow-junction can be found by use of duality.

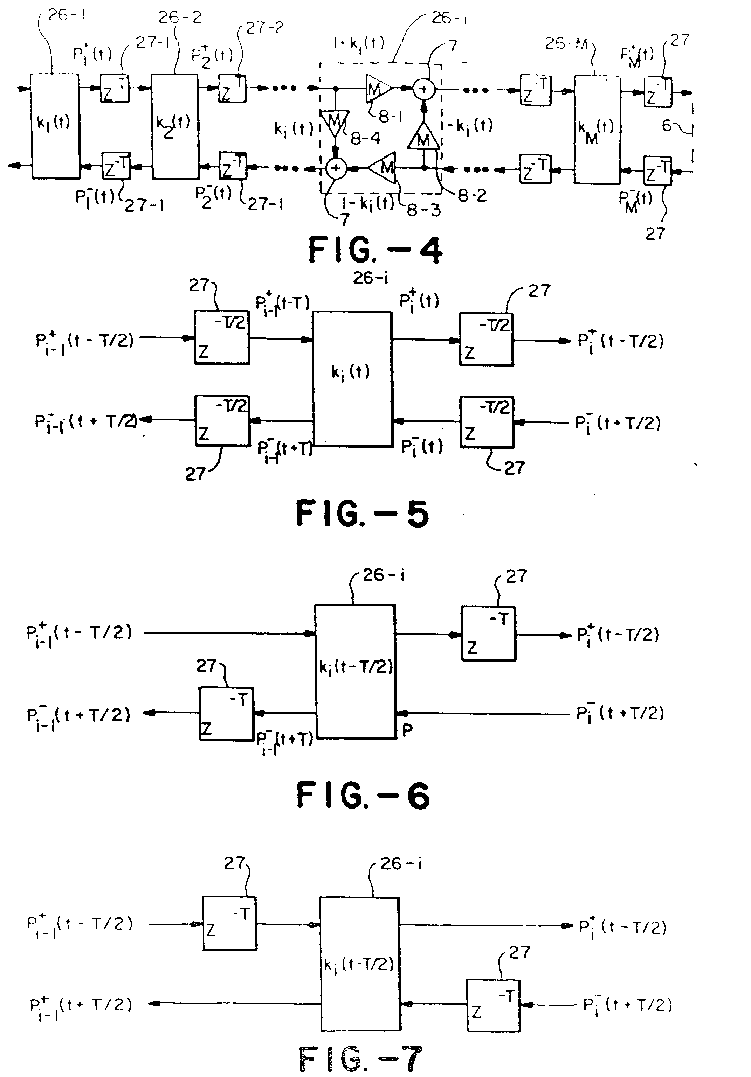

Cascade Waveguide Chains - FIG. 4

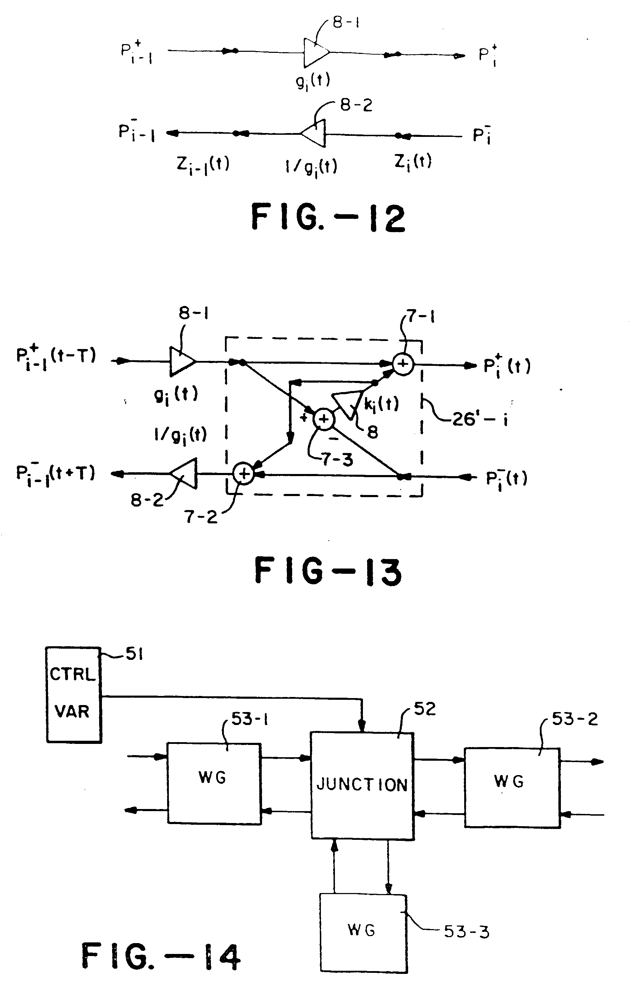

The basic waveguide chain 25 is shown in FIG.4. Each junction 26-1, 26-2, ..., 26-i, ..., 26-M enclosing the symbol $k_i(t)$ denotes a scattering junction characterized by $k_i(t)$. In FIG. 4, the junction 26-i typically utilizes multipliers(M) 8 and adders(+) 7 to form the junction. In FIG. 4, the multipliers 8-1, 8-2, 8-3 and 8-4 multiply by the factors $[1+k(i)]$, $[-k_i(t)]$, $[1-k_i(t)]$, and $[k_i(t)]$, respectively. An alternative junction implementation 26'-i of FIG. 13 requires only one multiply. The junction 26-2 in FIG. 4 corresponds, for example, to the junction 12 in FIG. 3. Similarly, the delays 27-1 and 27-2 in FIG. 4 correspond to the branches 15 and 16, respectively, in FIG. 3. The Kelly-Lochbaum junctions 26-i and one-multiply junction 26'-i (see FIG. 13) or any other type of lossless junction may be used for junction 26. In particular, the two-multiply lattice (not shown) and normalized ladder (FIG. 11) scattering junctions can be employed. The waveguide 25 employs delays 27 between each scattering junction 26 along both the top and bottom signal paths, unlike conventional ladder and lattice filters. Note that the junction 26-i of FIG. 4 employs four multipliers and two adds while junction 26'-i of FIG. 13 employs one multiply and three adds.

Waveguide Variations - FIGS. 4-14

Reduction of junction 26 to other forms is merely a matter of pushing delays 27 along the top rail around to the bottom rail, so that each bottom-rail delay becomes 2T seconds ($Z^{-2T}$) instead of T seconds $Z^{-T}$. Such an operation is possible because of the termination at the right by an infinite (or zero) characteristic impedance 6 in FIG. 4. In the time-varying case, pushing a delay through a multiply results in a corresponding time advance of the multiplier coefficient.

Imagine each delay element 27 in FIG. 4 being divided into halves, denoted by a delay of T/2 seconds. Then any waveguide can be built from sections such as shown in FIG. 5.

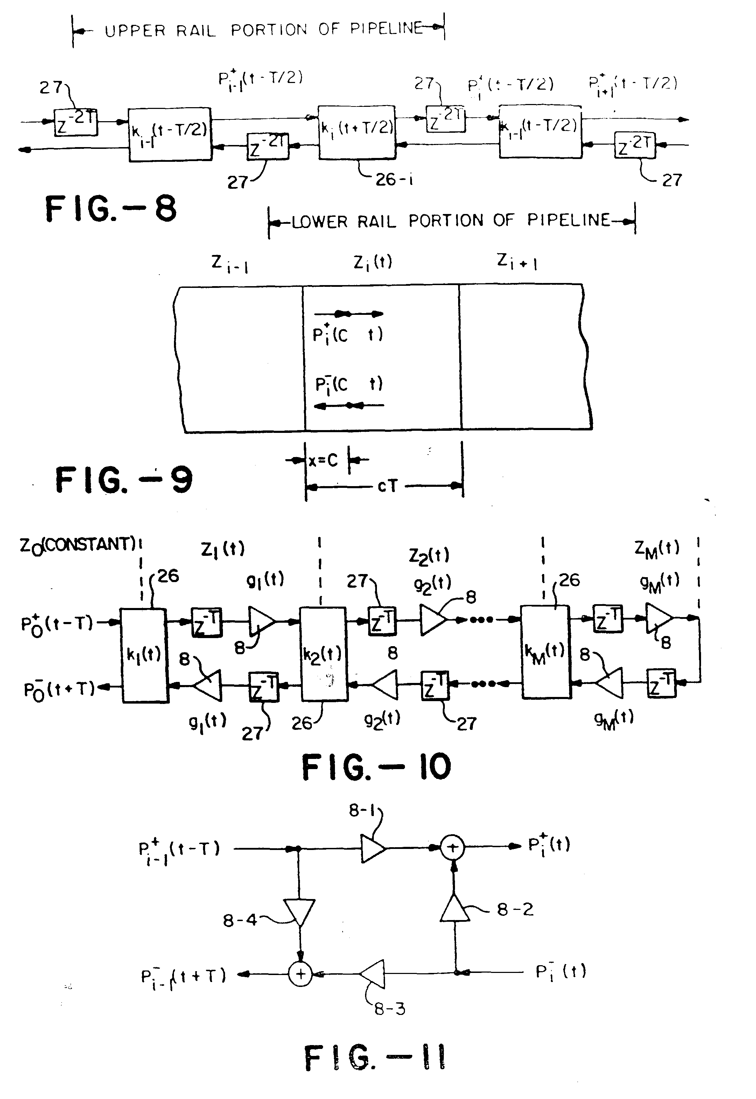

By a series of transformations, the two input-signal delays are pushed through the junction to the two output delays. A similar sequence of moves pushes the two output delays into the two input branches. Consequently, we can replace any waveguide section of the form shown in FIG. 5 by a section of the form shown in FIG. 6 or FIG. 7.

By alternately choosing the structure of FIG. 6 and 7, the structure of FIG. 8 is obtained. This structure has some advantages worth considering: (1) it consolidates delays to length 2T as do conventional lattice/ladder structures, (2) it does not require a termination by an infinite characteristic impedance, allowing it to be extended to networks of arbitrary topology (e.g., multiport branching, intersection, and looping), and (3) there is no long delay-free signal path along the upper rail as in conventional structures - a pipeline segment is only two sections long. This structure, termed the "half-rate waveguide filter", appears to have better overall characteristics than any other digital filter structure for many applications. Advantage (2) makes it especially valuable for modeling physical systems.

Finally, successive substitutions of the section of FIG. 6 and reapplication of the delay consolidation transformation lead to the conventional ladder or lattice filter structure. The termination at the right by a total reflection (shown as 6 in FIG. 4) is required to obtain this structure. Consequently, conventional lattice filters cannot be extended on the right in a physically meaningful way. Also, creating network topologies more complex than a simple series (or acyclic tree) of waveguide sections is not immediately possible because of the delay-free path along the top rail. For example, the output of a conventional structure cannot be fed back to the input.

Energy and Power

The instantaneous power in a waveguide containing instantaneous pressure P and flow U is defined as the product of pressure and flow as follows:

$$\underline{P} = PU = (P^+ + P^-)(U^+ + U^-) = \underline{P}^+ + \underline{P}^- \qquad \text{Eq. (4)}$$

where,

$$\underline{P}^+ = P^+ U^+ = Z(U^+)^2 = \Gamma(P^+)^2$$

$$\underline{P}^- = P^- U^- = -Z(U^-)^2 = -\Gamma(P^-)^2 \qquad \text{Eqs.(5)}$$

define the right-going and left-going power, respectively.

For the N-way waveguide junction, we have, using Kirchoff's node equations, Eq.(6) as follows:

$$\underline{P}_j \triangleq \sum_{i=1}^{N} P_i U_i = \sum_{i=1}^{N} P_j U_i = P_j \sum_{i=1}^{N} U_i = 0 \qquad \text{Eq.(6)}$$

Thus, the N-way junction is lossless; no net power, active or reactive, flows into or away from the junction.

Quantization Effects

While the ideal waveguide junction is lossless, finite digital wordlength effects can make exactly lossless networks unrealizable. In fixed-point arithmetic, the product of two numbers requires more bits (in general) for exact representation than either of the multiplicands. If there is a feedback loop around a product, the number of bits needed to represent exactly a circulating signal grows without bound. Therefore, some round-off rule must be included in a finite-precision implementation. The guaranteed absence of limit cycles and overflow oscillations is tantamount to ensuring that all finite-wordlength effects result in power absorption at each junction, and never power creation. If magnitude truncation is used on all outgoing waves, then limit cycles and overflow oscillations are suppressed. Magnitude truncation results in greater losses than necessary to suppress quantization effects. More refined schemes are possible. In particular, by saving and accumulating the low-order half of each multiply at a junction, energy can be exactly preserved in spite of finite precision computations.

Signal Power in Time-Varying Waveguides

The convention is adopted that the time variation of the characteristic impedance does not alter the traveling pressure waves $P_i^\pm$. In this case, the power represented by a traveling pressure wave is modulated by the changing characteristic impedance as it propagates. The actual power becomes inversely proportional to characteristic impedance:

$$\underline{P}_i(x,t) = \underline{P}_i^+(x,t) + \underline{P}_i^-(x,t) = \frac{[P_i^+(x,t)]^2 - [P_i^-(x,t)]^2}{Z_i(t)} \qquad \text{Eq.(7)}$$

This power modulation causes no difficulties in the Lyapunov theory which proves absence of limit cycles and overflow oscillations because it occurs identically in both the finite-precision and infinite-precision filters. However, in some applications it may be desirable to compensate for the power modulation so that changes in the characteristic impedances of the waveguides do not affect the power of the signals propagating within.

Consider an arbitrary point in the $i^{th}$ waveguide at time t and distance $x=c\tau$ measured from the left boundary, as shown in FIG. 9. The right-going pressure is $P_i^+(x,t)$ and the left-going pressure is $P_i^-(x,t)$. In the absence of scaling, the waveguide section behaves (according to our definition of the propagation medium properties) as a pressure delay line, and we have $P_i^+(x,t)=P_i^+(0,t-\tau)$ and $P_i^-(x,t)=P_i^-(0,t+\tau)=P_i^-(cT,t-T+\tau)$. The left-going and right-going components of the signal power are $[P_i^-(x,t)]^2/Z_i(t)$ and $[P_i^+(x,t)]^2/Z_i(t)$, respectively.

Below, three methods are discussed for making signal power invariant with respect to time-varying branch impedances.

Normalized Waveguides

Suppose the traveling waves are scaled as the characteristic impedance changes in order to hold signal power fixed. Any level can be chosen as a reference, but perhaps it is most natural to fix the power of each wave to that which it had upon entry to the section. In this case, it is quickly verified that the proper scaling is:

$$\tilde{P}_i^+(x,t)=[(Z_i(t))/(Z_i(t-\tau))]^{\frac{1}{2}}\ P_i^+(0,t-\tau),\quad x=c\tau$$

$$\text{Eqs.(8)}$$

$$\tilde{P}_i^-(x,t)=[(Z_i(t))/(Z_i(t-T+\tau))]^{\frac{1}{2}}\ P_i^-(cT,t-T+\tau)$$

In practice, there is no need to perform the scaling until the signal actually reaches a junction. Thus, we implement

$$\tilde{P}_i^+(cT,t)=g_i(t)P_i^+(0,t-T)$$

$$\text{Eqs.(9)}$$

$$\tilde{P}_i^-(0,t)=g_i(t)P_i^-(cT,t-T)$$

where

$$g_i(t)=[(Z_i(t))/(Z_i(t-T))]^{\frac{1}{2}}$$

This normalization is depicted in FIG. 10. In FIG. 10, each of the multipliers 8 multiplies the signal by $g_i(t)$ as given by Eqs.(9). In the single-argument notation used earlier, Eqs.(9) become

$$\tilde{P}_i^+(t-T)=g_i(t)P_i^+(t-T)$$

$$\text{Eqs.(10)}$$

$$\tilde{P}_i^-(t)=g_i(t)P_i^-(t)$$

This normalization strategy has the property that the time-varying waveguides (as well as the junctions) conserve signal power. If the scattering junctions are implemented with one-multiply structures, then the number of multiplies per section rises to three when power is normalized. There are three additions as in the unnormalized case. In some situations (such as in the two-stage structure) it may be acceptable to normalize at fewer points; the normalizing multiplies can be pushed through the scattering junctions and combined with other normalizing multiplies, much in the same way delays were pushed through the junctions to obtain standard ladder/lattice forms. In physical modeling applications, normalizations can be limited to opposite ends of a long cascade of sections with no interior output "taps."

To ensure passivity of a normalized-waveguide with finite-precision calculations, it suffices to perform magnitude truncation after multiplication by $g_i(t)$. Alternatively, extended precision can be used within the scattering junction.

Normalized Waves

Another approach to normalization is to propagate rms-normalized waves in the waveguide. In this case, each delay-line contains

$$\tilde{P}_i^+(x,t) = P_i^+(x,t) / [Z_i(t)]^{\frac{1}{2}}$$

$$\text{Eqs. (11)}$$

$$\tilde{P}_i^-(x,t) = P_i^-(x,t) / [Z_i(t)]^{\frac{1}{2}}$$

We now consider $\tilde{P}^{\pm}$ (instead of $P^{\pm}$) to be invariant with respect to the characteristic impedance. In this case,

$$\tilde{P}_i^+(c,t) = P_i^+(cT,t) / [Z_i(t)]^{\frac{1}{2}} = P_i^+(0,t-T) / [Z_i(t-T)]^{\frac{1}{2}} = \tilde{P}_i^+(t-T)$$

The scattering equations become

$$[Z_i(t)]^{\frac{1}{2}} \tilde{P}_i^+(0,t) = [1+k_i(t)][Z_{i-1}(t)]^{\frac{1}{2}} \tilde{P}_{i-1}^+(cT,t) - k_i(t)[Z_i(t)]^{\frac{1}{2}} \tilde{P}_i(0,t)$$

$$\text{Eqs. (12)}$$

$$[Z_{i-1}(t)]^{\frac{1}{2}} \tilde{P}_{i-1}^-(cT,t) = k_i(t)[Z_{i-1}(t)]^{\frac{1}{2}} \tilde{P}_{i-1}^+(ct,T) + [1-k_i(t)][Z_i(t)]^{\frac{1}{2}} \tilde{P}_i^-(t)$$

or, solving for $\tilde{P}_i^{\pm}$

$$\tilde{P}_i^+(0,t) = [1+k_i(t)]\ [(Z_{i-1}(t))/(Z_i(t))]^{\frac{1}{2}}\ \tilde{P}_{i-1}^+(cT,t)-k_i(t)\tilde{P}_i^-(0,t)$$

$$\text{Eqs.}(13)$$

$$\tilde{P}_{i-1}^-(cT,t) = k_i(t)\tilde{P}_{i-1}^+(ct,T)+[1-k_i(t)]\ [(Z_i(t))/(Z_{i-1}(t))]^{\frac{1}{2}}\ \tilde{P}_i^-(t)$$

But,

$$(Z_{i-1}(t))/(Z_i(t)) = (1-k_i(t))/(1+k_i(t)) \qquad\qquad \text{Eq.}(14)$$

whence

$$[1+k_i(t)]\ [(Z_{i-1}(t))/(Z_i(t))]^{\frac{1}{2}} =$$
$$[1-k_i(t)]\ [(Z_i(t))/(Z_{i-1}(t))]^{\frac{1}{2}} = [1-k_i^2(t)]^{\frac{1}{2}} \qquad\qquad \text{Eq. (15)}$$

The final scattering equations for normalized waves are

$$\tilde{P}_i^+(0,t)=c_i(t)\tilde{P}_{i-1}^+(cT,t)-s_i(t)\tilde{P}_i^-(0,t)$$

$$\text{Eqs.}(16)$$

$$\tilde{P}_{i-1}^-(cT,t)=s_i(t)\tilde{P}_{i-1}^+(ct,T)+c_i(t)\tilde{P}_i^-(t)$$

where

$$s_i(t) \triangleq k_i(t)$$

$$\text{Eqs.}(17)$$

$$c_i(t) \triangleq [1-k_i^2(t)]^{\frac{1}{2}}$$

can be viewed as the sine and cosine, respectively, of a single angle $\theta_i(t)=\sin^{-1}[k_i(t)]$ which characterizes the junction. FIG. 11 illustrates the Kelly-Lochbaum junction as it applies to normalized waves. In FIG. 11, the multipliers 8-1, 8-2, 8-3, and 8-4 multiply by the factors $[1-k_i^2(t)]^{\frac{1}{2}}$, $-k_i(t)$, $[1-k_i^2(t)]^{\frac{1}{2}}$, and $k_i(t)$, respectively. In FIG. 11, $k_i(t)$ cannot be factored out to obtain a one-multiply structure. The four-multiply structure of FIG. 11 is used in the normalized ladder filter (NLF).

Note that normalizing the outputs of the delay lines saves one multiply relative to the NLF which propagates normalized waves. However, there are other differences to consider. In the case of normalized waves, duals are easier, that is, changing the propagation variable from pressure to velocity or vice versa in the $i^{th}$ section requires no signal normalization, and the forward and reverse reflection coefficients are unchanged. Only sign-reversal is required for the reverse path. Also, in the case of normalized waves, the rms signal level is the same whether or not pressure or velocity is used. While appealing from a "balance of power" standpoint, normalizing all signals by their rms level can be a disadvantage. In the case of normalized delay-line outputs, dynamic range can be minimized by choosing the smaller of pressure and velocity as the variable of propagation.

Transformer-Coupled Waveguides

Still another approach to the normalization of time-varying waveguide filters is perhaps the most convenient of all. So far, the least expensive normalization technique is the normalized-waveguide structure, requiring only three multiplies per section rather than four in the normalized-wave case. Unfortunately, in the normalized-waveguide case, changing the characteristic impedance of section i results in a changing of the reflection coefficients in both adjacent scattering junctions. Of course, a single junction can be modulated in isolation by changing all downstream characteristic impedances by the same ratio. But this does not help if the filtering network is not a cascade chain or acyclic tree of waveguide sections. A more convenient local variation in characteristic impedance can be obtained using transformer coupling. A transformer joins two waveguide sections of differing characteristic impedance in such a way that signal power is preserved and no scattering occurs. It turns out that filter structures built using the transformer-coupled waveguide are equivalent to those using the normalized-wave junction described in the previous subsection, but one of the four multiplies can be traded for an addition.

From Ohm's Law and the power equation, an impedance discontinuity can be bridged with no power change and no scattering using the following relations:

$$\left[P_i^+\right]^2 / [Z_i(t)] = \left[P_{i-1}^+\right]^2 / [Z_{i-1}(t)] \qquad \text{Eqs.(18)}$$

$$\left[P_i^-\right]^2 / [Z_i(t)] = \left[P_{i-1}^-\right]^2 / [Z_{i-1}(t)]$$

Therefore, the junction equations for a transformer can be chosen as

$$P_i^+ = g_i(t) P_{i-1}^+ \qquad \qquad \text{Eqs.(19)}$$

$$P_{i-1}^- = g_i^{-1}(t) P_i^-$$

where, from Eq. (14)

$$g_i(t) \triangleq [(Z_i(t))/(Z_{i-1}(t))]^{\frac{1}{2}} = [(1+k_i(t))/(1-k_i(t))]^{\frac{1}{2}} \qquad \text{Eq.(20)}$$

The choice of a negative square root corresponds to a gyrator. The gyrator is equivalent to a transformer in cascade with a dualizer. A dualizer is a direct implementation of Ohm's law (to within a scale factor) where the forward path is unchanged while the reverse path is negated. On one side of the dualizer there are pressure waves, and on the other side there are velocity waves. Ohm's law is a gyrator in cascade with a transformer whose scale factor equals the characteristic admittance.

The transformer-coupled junction is shown in FIG. 12. In FIG. 12, the multipliers 8-1 and 8-2 multiply by $g_i(t)$ and $1/g_i(t)$ where $g_i(t)$ equals $[Z_i(t)/Z_{i-1}(t)]^{\frac{1}{2}}$. A single junction can be modulated, even in arbitrary network topologies, by inserting a transformer immediately to the left (or right) of the junction. Conceptually, the characteristic impedance is not changed over the delay-line portion of the waveguide section; instead it is changed to the new time-varying value just before (or after) it meets the junction. When velocity is the wave variable, the coefficients $g_i(t)$ and $g_i^{-1}(t)$ in FIG. 12 are swapped (or inverted).

So, as in the normalized waveguide case, the two extra multipliers 8-1 and 8-2 of FIG. 12 provide two extra multiplies per section relating to the unnormalized (one-multiply) case, thereby achieving time-varying digital filters which do not modulate stored signal energy. Moreover, transformers enable the scattering junctions to be varied independently, without having to propagate time-varying impedance ratios throughout the waveguide network.

In FIG. 13, the one-multiply junction 26'-i includes three adders 7-1, 7-2, and 7-3, where adder 7-3 functions to subtract the second rail signal, $P_i^-(t)$, from the first rail signal, $[P_{i-1}^+(t-T)][g_i(t)]$. Junction 26'-i also includes the multiplier 8 which multiplies the output from adder 7-3 by $k_i(t)$. FIG. 13 utilizes the junction of FIG. 12 in the form of multipliers 8-1 and 8-2 which multiply the first and second rail signals by $g_i(t)$ and $1/g_i(t)$, respectively, where $g_i(t)$ equals $[(1-k_i(t))/(1+k_i(t))]^{\frac{1}{2}}$.

It is interesting to note that the transformer-coupled waveguide of FIG. 13 and the wave-normalized waveguide (shown in FIG. 11) are equivalent. One simple proof is to start with a transformer and a Kelly-Lochbaum junction, move the transformer scale factors inside the junction, combine terms, and arrive at FIG. 11. The practical importance of this equivalence is that the normalized ladder filter (NLF) can be implemented with only three multiplies and three additions instead of four multiplies and two additions.

The limit cycles and overflow oscillations are easily eliminated in a waveguide structure, which precisely simulates a sampled interconnection of ideal transmissions line sections. Furthermore, the waveguide can be transformed into all well-known ladder and lattice filter structures simply by pushing delays around to the bottom rail in the special case of a cascade, reflectively terminated waveguide network. Therefore, aside from specific round-off error and time skew in the signal and filter coefficients, the samples computed in the waveguide and the samples computed in other ladder/lattice filters are identical (between junctions).

The waveguide structure gives a precise implementation of physical wave phenomena in time-varying media. This property is valuable in its own right for simulation purposes. The present invention permits the delay or advance of time-varying coefficient streams in order to obtain physically correct time-varying waveguide (or acoustic tube) simulations using standard lattice/ladder structures. Also, the necessary time corrections for the traveling waves, needed to output a simulated pressure or velocity, are achieved.

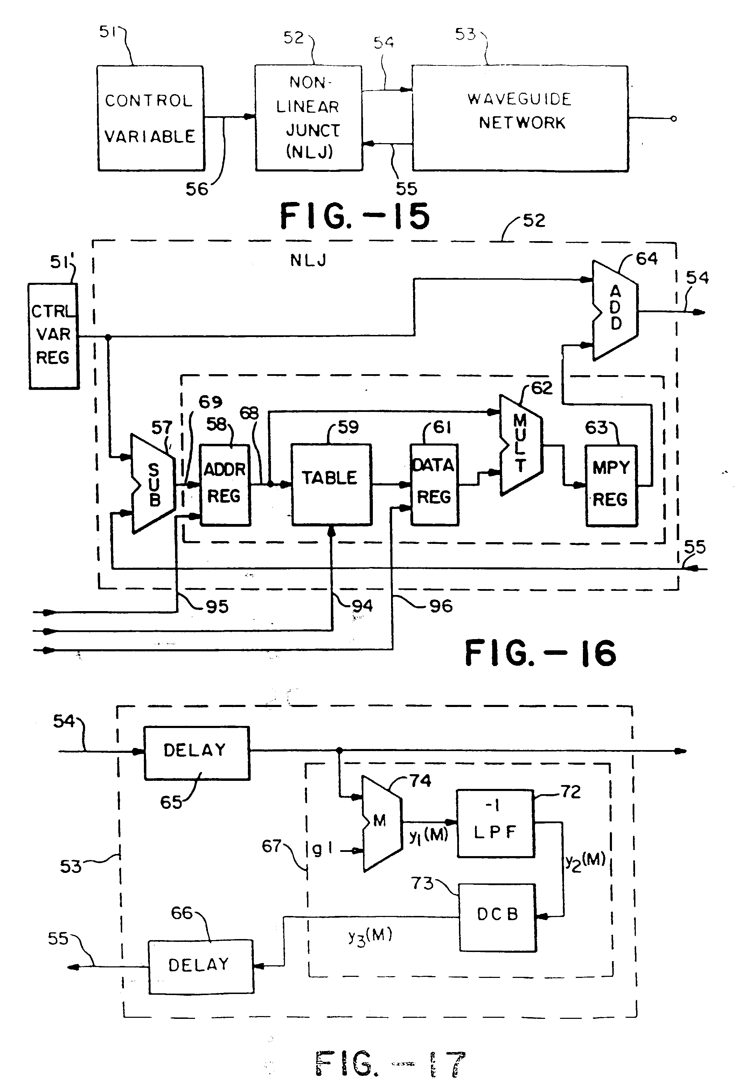

Waveguide Networks with Non-Linear Junction - FIG. 14

In FIG. 14, a plurality of waveguides 53 are interconnected by a non-linear junction 52. In the particular embodiment of FIG. 14, the junction 52 has three ports, one for each of the waveguide networks 53-1, 53-2, and 53-3. However, junction 52 can be an N-port junction interconnecting N waveguides or waveguide networks 53. The control variable register 51 provides one or more control variables as inputs to the junction 52. In FIG. 14 when only a single waveguide is utilized, the single waveguide becomes a special case, single-port embodiment of FIG. 14. Single port examples of the FIG. 14 structure are described hereinafter in connection with reed instruments such as clarinets or saxophones. Multi-port embodiments of the FIG. 14 structure are described hereinafter in connection with stringed instruments such as violins. A multi-port variation of the FIG. 14 structure is also described hereinafter in connection with a reverberator. Many other instruments not described in detail can also be simulated in accordance with the present invention. For example, flutes, organs, recorders, basoons, oboes, all brasses, and percussion instruments can be simulated by single or multi-port, linear or non-linear junctions in combination with one or more waveguides or waveguide networks.

Waveguide with Non-Linear Terminating Junction - FIG. 15

In FIG. 15, a block diagram representation of a waveguide 53 driven by a non-linear junction 52 is shown. The non-linear junction 52 provides the input on the first rail 54 to the waveguide 53 and receives the waveguide output from the second rail on lines 55. A control variable unit 51 provides a control variable to the non-linear junction 52. The FIG. 15 structure can be used as a musical instrument for simulating a reed instrument in which case the control variable unit 51 simulates mouth pressure, that is the pressure drop across a reed. The non-linear junction 52 simulates the reed and the waveguide 53 simulates the bore of the reed instrument.

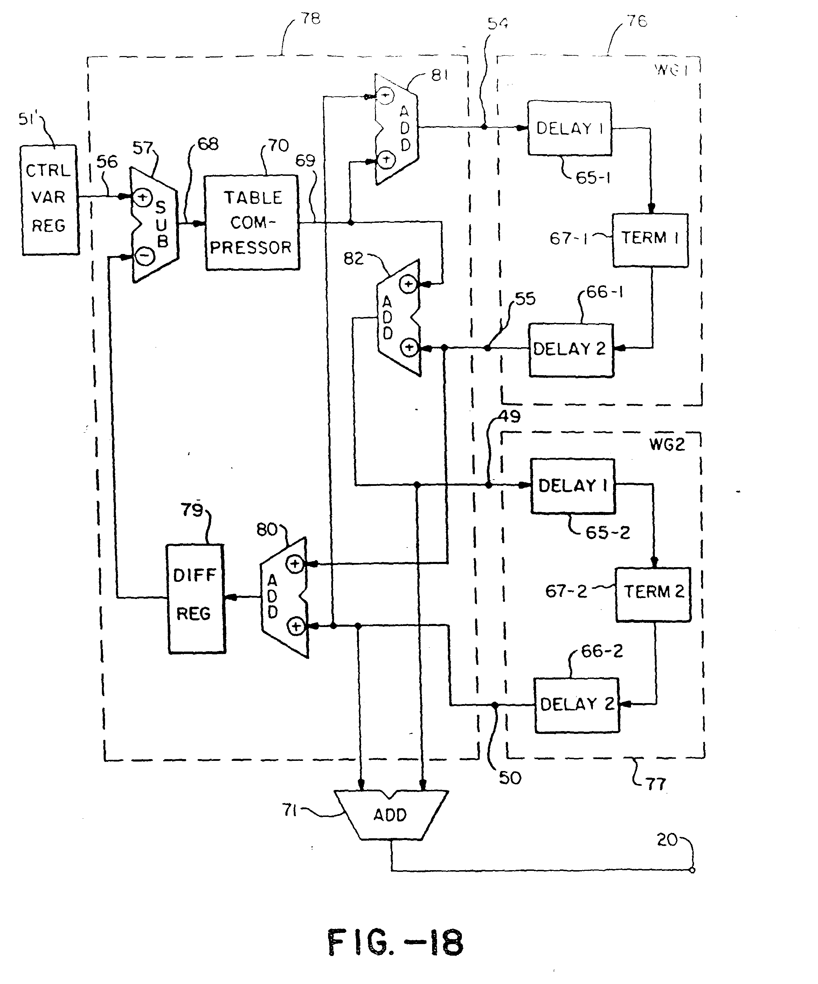

Non-Linear Junction - FIG. 16

FIG. 16 depicts further details of a non-linear junction useful in connection with the FIG. 15 instrument for simulating a reed. The control register input on lines 56 is a control variable, such as mouth pressure. The control variable forms one input (negative) to a subtractor 57 which receives another input (negative) directly from the most significant bits of the waveguide second rail on lines 55. The subtractor 57 subtracts the waveguide output on lines 55 and the control variable on lines 56 to provide a 9-bit address on lines 69 to the coefficient store 70 and specifically the address register 58. The address in register 58 provides the address on lines 68 to a table 59 and to a multiplier 62. The table 59 is addressed by the address, x, from address register 58 to provide the data, g(x), in a data register 61. The contents, g(x), in the data register 61 are multiplied by the address, x, from address register 58 in multiplier 62 to provide an output, x*g(x), in the multiplier register 63 which is equal to f(x). The output from the multiplier register 63 is added in adder 64 to the control variable to provide the first rail input on lines 54 to the waveguide 53 of FIG. 15.

In FIG. 16, table 59 in one embodiment stores 512 bytes of data and provides an 8-bit output to the data register 61. The multiplier 62 provides a 16-bit output to the register 63. The high order 8 bits in register 63 are added in saturating adder 64 to the 8 bits from the variable register 51' to provide a 16-bit output on lines 54. Similarly, the high order 8-bits from the 16-bit lines 55 are subtracted in subtractor 57.

The contents of the table 59 in FIG. 16 represent compressed data. If the coefficients required are f(x) from the compressed table 70, only a fewer number of values, g(x), are stored in the table 59. The values stored in table 59 are f(x)/x which are equal to g(x). If x is a 16-bit binary number, and each value of x represents one 8-bit byte of data for f(x), table 59 is materially reduced in size to 512 bytes when addressed by the high-order 9 bits of x. The output is then expanded to a full 16 bits by multiplication in the multiplier 62.

Further compression is possible by interpolating values in the table 59. Many table interpolation techniques are well known. For example, linear interpolation could be used. Interpolation can also be used to compress a table of f(x) values directly, thus saving a multiply while increasing the needed table size, for a given level of relative error.

Other examples include a double look-up, address normalization, root-power factorization, address and value quantization, address mapping to histogram. Other compression techniques can be employed.

In FIG. 17, further details of a schematic representation of the waveguide 53 are shown. The waveguide 53 includes a first rail receiving the input on lines 54 and comprising a delay 65. A terminator 67 connects the delay 65 to the second rail delay 66 which in turn provides the second rail output on lines 55.

In an embodiment where the FIG. 16 signal processor of FIGS. 16 and 17 simulates a reed instrument, the terminator 67 is typically a single pole low-pass filter.

To simulate clarinet tone holes, a three-port scattering junction is introduced into the waveguide. Typically, the first three or four adjacent open tone holes participate in the termination of the bore.

In FIG. 17, the terminator 67 includes a multiplier 74, an inverting low-pass filter 72 and a DC blocking circuit 73. The multiplier 74 multiplies the signal on line 75 from the delay 65 by a loss factor $g_1$ where $g_1$ is typically $1-2^{-4} = 0.9375$ for a clarinet. The output from the multiplier 74 is designated $y_1(n)$ where n is the sampled time index. The output from the low-pass filter 72 is designated $y_2(n)$, and the output from the DC blocking unit 73 is designated $y_3(n)$.

For a clarinet, the low-pass filter 72 has a transfer function $H_{12}(Z)$ as follows:

$$H_{12}(Z) = -(1-g)/(1-gZ^{-1})$$

Therefore the signal $y_2(n)$ output from the low-pass filter 72 is given as follows:

$$y_2(n) = (g-1)y_1(n) + gy_2(n-1)$$

In the above equations, g is a coefficient which is typically determined as equal to $1-2^{-k}$ where k can be any selected value. For example, if k is 3, g is equal to .875 and g equal to 0.9 is a typical value. As another example, $1-2^{-3}+2^{-5} = 0.90625$.

In FIG. 17, the transfer function, $H_{23}(Z)$, of the DC blocking circuit 73 is given as follows:

$$H_{23}(Z) = (1-Z^{-1})/(1-rZ^{-1})$$

With such a transfer function, the output signal $y_3(n)$ is given as follows:

$$y_3(n) = y_2(n) - y_2(n-1) + ry_3(n-1)$$

In simulations, the value of r has been set to zero. In actual instruments, DC drift can cause unwanted numerical overflow which can be blocked by using the DC block unit 73. Furthermore, when using the compressed table 70 of FIG. 16, the error terms which are produced are relative and therefore are desirably DC centered. If a DC drift occurs, the drift has the effect of emphasizing unwanted error components. Relative signal error means that the ratio of the signal error to signal amplitude tends to remain constant. Therefore, small signal values tend to have small errors which do not significantly disturb the intended operation.

In FIG. 17, for a clarinet, the delays 65 and 66 are typically selected in the following manner. One half the desired pitch period less the delay of the low-pass filter 72, less the delay of the DC block in unit 73, less the delay encountered in the non-linear junction 52 of FIG. 16.

When a saxophone is the reed instrument to be simulated by the FIG. 16 and FIG. 17 devices, a number of changes are made. The non-linear junction of FIG. 16 remains the same as for a clarinet. However, the waveguide network 53 of FIG. 15 becomes a series of cascaded waveguide sections, for example, of the FIG. 4 type. Each waveguide section represents a portion of the bore of the saxophone. Since the bore of a saxophone has a linearly increasing diameter, each waveguide section simulates a cylindrical section of the saxophone bore, with the waveguide sections representing linearly increasing diameters.

For a saxophone and other instruments, it is useful to have a non-linear bore simulation. Non-linearity results in excess absorption and pressure-dependent phase velocity. In order to achieve such non-linear simulation in accordance with the present invention, one method is to modify the delays in the waveguide structure of FIG. 8. In FIG. 8, each of the delays, $Z^{-2T}$, includes two units of delay. In order to introduce a non-linearity, one of the two units of delay is replaced by an all-pass filter so that the delay D changes from $Z^{-2T}$ to the following:

$$D = [Z^{-T}][(h+Z^{-T})/(1+hZ^{-T})]$$

With such a delay, the output signal, $y_2(n)$ is given in terms of the input signal, $y_1(n)$ as follows:

$$y_2(n) = h*y_1(n-1) + y_1(n-2) - h*y_2(n-1)$$

In the above equations, in order to introduce the non-linearity, the term h is calculated as a function of the instantaneous pressure in the waveguide, which is the sum of the travelling-wave components in the first rail and the second rail. For example, the first rail signal input to the delay, $y_1^+(n)$ is added to second rail signal $y_1^-(n)$ and then utilized by table look up or otherwise to generate some function for representing h as follows:

$$h = f[y_1^+(n) + y_1^-(n)]$$

The delay of the first-order all-pass as a function of h can be approximated by $(1-h)/(1+h)$ at low frequencies relative to the sampling rate. Typically, h is between $1-\varepsilon$ and 0 for some small positive $\varepsilon$ (the stability margin).

Using the principles described, simulation of a non-linear waveguide medium (such as air in a clarinet bore) is achieved. For clarinet and other instruments, the bore which is modeled by the waveguides includes tone holes that are blocked and unblocked to change the pitch of the tone being played. In order to create the equivalent of such tone holes in the instruments using waveguides a three-port junction can be inserted between cascaded waveguide sections. One port connects to one waveguide section, another port connects to another waveguide section, and the third port is unconnected and hence acts as a hole. The signal into the third port is represented as $P_3^+$ and this signal is equal to zero. The radiated signal from the third port, that is the radiated pressure, is denoted by $P_3^-$. The three-port structure for the tone hole simulator is essentially that of FIG. 14 without the waveguide 53-3 and without any control variable 51 input as indicated by junction 52 in FIG. 14. The junction 52 is placed as one of the junctions, such as junction 26-i in FIG. 4. With such a configuration, the junctions pressure $P_J$, is given as follows:

$$P_J = \sum_{i=1}^{3} \alpha_i P_i^+$$

where,

$$\alpha_i = 2\Gamma_i/(\Gamma_1 + \Gamma_2 + \Gamma_3),$$

$\Gamma_1$ = characteristic admittance in $i^{th}$ waveguide

$$P_i^- = P_J - P_i^+$$

$$P_J = \alpha_1 P_1^+ + \alpha_2 P_2^+ = \alpha_1 P_1^+ + (2 - \alpha_1 - \alpha_3) P_2^+$$

$$P_1^- = P_J - P_1^+ = (\alpha_1 - 1) P_1^+ + \alpha_2 P_2^+$$

$$P_2^- = P_J - P_2^+ = \alpha_1 P_1^+ + (\alpha_2 - 1) P_2^+$$

$$P_3^- = P_J - P_3^+ = P_J \text{ (tone hole output)}$$

$$\text{Let, } \Gamma_3 = \begin{cases} (\Gamma_1 + \Gamma_2)/2, \text{ open hole} \\ 0, \text{ closed hole} \end{cases}$$

Then,

$$\alpha_3 = \begin{cases} 1, \text{ open hole} \\ 0, \text{ closed hole} \end{cases}$$

$$\alpha_2 = \begin{cases} 1 - \alpha_1, \text{ open hole} \\ 2 - \alpha_1, \text{ closed hole} \end{cases}$$

Then, with $P_\Delta^+ = P_1^+ - P_2^+$, we obtain the one multiply tone-hole simulation:

$$P_2^- = \alpha_1 P_\Delta^+ , \; P_1^- = P_2^- - P_\Delta^+ , \text{ (open hole)}$$

In a smooth bore, $\Gamma_1 = \Gamma_2 = \Gamma$ and $\Gamma_3 = \beta\Gamma$, where $\beta$ is the cross-sectional area of the tone hole divided by the cross-sectional area of the bore. For a clarinet, $\beta=0.102$ and for a saxophone, $\beta=0.436$, typically. So we have:

$$\Gamma_3 \underset{=}{\Delta} \beta\Gamma = \begin{cases} \beta\Gamma, \text{ open} \\ 0, \text{ closed} \end{cases}$$

Then,

$$\alpha_1 = \alpha_2 = 2\Gamma/(2\Gamma + \beta\Gamma) = 2/(2+\beta) \underline{\Delta} \alpha$$

$$\alpha_3 = 2\beta/(2+\beta) = \beta\alpha,$$

There is now a single parameter

$$\alpha = \begin{cases} 2/(2+\beta), \text{ open} \\ 1, \text{ closed} \end{cases}$$

So, the tone hole simulation is given by

$$P_J = \alpha( P_1^+ + P_2^+ ) \text{ (if open)}$$

$$P_1^- = P_J - P_2^+ = \alpha P_2^+ + (\alpha-1) P_1^+ = P_2^+ \text{ (if closed)}$$

$$P_2^- = P_J - P_1^+ = \alpha P_1^+ + (\alpha-1) P_2^+ = P_1^+ \text{ (if closed)}$$

Summary:

$$\alpha = \begin{cases} 0.95, \text{ clarinet} \\ 0.821, \text{ saxophone} \end{cases}$$

$$\Gamma_3 = \beta\Gamma$$

$$P_J = \alpha( P_1^+ + P_2^+ )$$

$$P_1^- = P_J - P_1^+$$

$$P_2^- = P_J - P_2^+$$

$$\alpha = \begin{cases} 2/(2+\beta), \text{ open} \\ 1, \text{ closed} \end{cases}$$

a = bore radius

b = hole radius

$$\beta = b^2/a^2 = \begin{cases} 0.102, \text{ clarinet} \\ 0.436, \text{ saxophone} \end{cases}$$

$$\alpha = (2a^2)/(2a^2+b^2) \text{ - hole open}$$

$$\alpha = 1 - \text{hole closed}$$

$P_J$ is radiated away spherically from the open hole with a (1/R) amplitude attenuation.

Reed Simulation

In FIG. 23, a graph is shown representing the data that is typically stored in the table 59 of FIG. 16 for a reed instrument. The output signal $R^-(n)$ on line 54 is as follows:

$$R^-(n) = k^* \, P_\Delta^+/2 + P_m(n)/2$$

The control variable input on line 56 is $P_m(n)/2$ and the input on line 68 to the table 59 is

$$(P_\Delta^+)/2 = (R^+(n) - P_m(n)/2)$$

where $R^+(n)$ is the signal sample on line 55 of FIG. 16.

The table 59 is loaded with values which, when graphed, appear as in FIG. 23. The curve 92 in FIG. 23 has a maximum value of one and then trails off to a minimum value of zero. The maximum value of one occurs between $(P_{\Delta,min}^+)/2$ and $(P_{\Delta,c}^+)/2$. The value $(P_{\Delta,c}^+)/2$ corresponds to the closure of the reed. From $(P_{\Delta,c}^+)/2$ to $(P_{\Delta,max}^+)/2$ the curve 92 decays gradually to zero. The equation for the curve 92 is given as follows,

$$\text{Curve} = [(P_{\Delta,max}^+ - P_\Delta^+)/(P_{\Delta,max}^+ - P_{\Delta,c}^+)]^\ell$$

where $\ell = 1, 2, 3, ...$

The output from the table 59 is the variable k as given in FIG. 23, that is,

$$k = k[(P_\Delta^+)/2]$$

Bowed-String Simulation

In FIG. 24, a graph is shown representing the data that is typically stored in the coefficient table 59 of the signal table 70 (see FIG. 16) of FIG. 18. The output signals $V_{s,1}^-$ on line 54 and $V_{s,r}^-$ on line 49 are as follows:

$$V_{s,1}^- = k(V_\Delta^+) \, ^* \, V_\Delta^+ + V_{s,r}^+$$

$$V_{s,r}^- = k(V_\Delta^+) \, ^* \, V_\Delta^+ + V_{s,1}^+$$

The control variable input on line 56 is bow velocity, $V_b$, and the input on line 68 to the table 59 is

$$V_\Delta^+ = V_b - (V_{s,1}^+ + V_{s,r}^+)$$

where $V_{s,1}^+$ is the signal sample on line 55 and $V_{s,r}^+$ is signal sample on line 50 of FIG. 18.

The table 59 is loaded with values which, when graphed, appear as in FIG. 24. The curve 93 in FIG. 24 has a maximum value of one and then trails off to a minimum value of zero to the left and right symmetrically. The maximum value of one occurs between $-V_{\Delta,c}^+$ and $+V_{\Delta,c}^+$. From $(V_{\Delta,c}^+)$ to $(V_{\Delta,max}^+)$ the curve 93 decays gradually to zero. The equation for the curve 93 is given as follows,

$$\text{Curve} = [(V_{\Delta,max}^+ - V_\Delta^+)/(V_{\Delta,max}^+ - V_{\Delta,c}^+)]^\ell$$

where $\ell = 1, 2, 3, ...$

The output from the table 59 is the reflection coefficient k as given in FIG. 24, that is,

$$k = k[( V_{\Delta}^{+} )]$$

## Compressed Table Variations

The compressed table 59 of FIG. 16 containing g(x)=f(x)/x is preferable in that quantization errors are relative. However, alternatives are possible. The entire table compressor 70 of FIG. 16 can be replaced with a simple table. In such an embodiment, the round off error is linear and not relative. For linear errors, the error-to-signal ratio tends not to be constant. Therefore, for small signal amplitudes, the error tends to be significant so that the error may interfere with the intended operation. In either the table compressor embodiment 70 of FIG. 16 or a simple table previously described, the tables can employ compression techniques such as linear, Lagrange and quadratic interpolation with satisfactory results. In a linear interpolation example, the curve 92 of FIG. 23 would be replaced by a series of straight line segments thereby reducing the amount of data required to be maintained in the table.

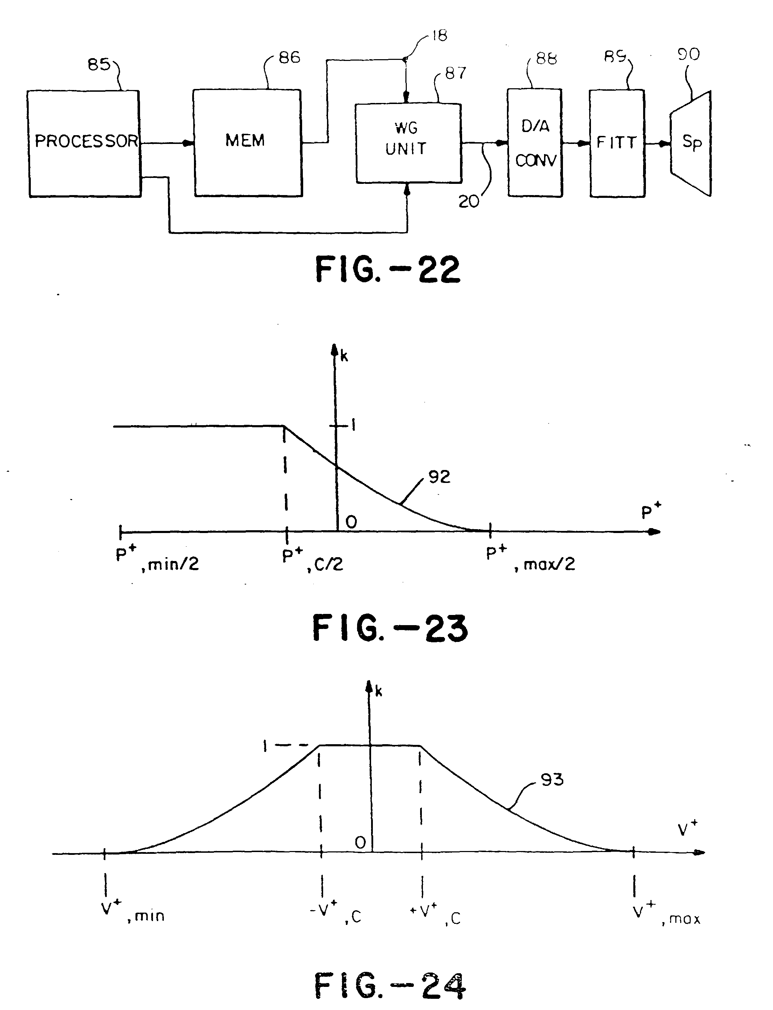

Also table 59, address register 58 and data register 61 of FIG. 16 each have inputs 94, 95 and 96 from processor 85 (FIG. 22).

The inputs from processor 85 function to control the data or the access of data from the table 59. Modifications to the data in the table can be employed, for example, for embouchure control for reed synthesis. Similarly, articulation control for bowed-string synthesis is possible. In one example, the address register 58 has high order address bits, bits 10 and 11, which are supplied by lines 95 from the processor. In this manner, the high order bits can be used to switch effectively to different subtables within the table 59. This switching among subtables is one form of table modification which can be used to achieve the embouchure and articulation modifications.

## Non-Linear Junction with Plural Waveguides - FIG. 18

In FIG. 18, further details of another example of a non-linear junction is shown connected between a first waveguide 76 and a second waveguide 77. The non-linear junction 78 receives an input from the control variable register 51' and provides inputs to the waveguide 76 on lines 54 and receives an output on lines 55. Also the non-linear junction 78 provides an output to the waveguide 77 on lines 49 and receives an input on lines 50.

In FIG. 18, the non-linear junction 78 includes an adder 57 receiving as one input the control variable from the control variable register 51' on lines 56. The other input to the subtractor 57 is from the difference register 79 which in turn receives an output from an adder 80. The adder 80 adds the inputs on lines 55 from the waveguide 76 and lines 50 from the waveguide 77.

The output from the subtractor 57 on lines 68 is input to the table compressor 70. The table compressor 70 of FIG. 12 is like the table compressor 70 of FIG. 10 and provides an output on lines 69. The output on lines 69 connects as one input to each of the adders 81 and 82. The adder 81 receives as the other input the input from lines 50 from the waveguide 77 to form the input on lines 54 to the first waveguide 76. The second adder 82 receives the table compressor signal on lines 69 and adds it to the input from the first waveguide 76 on lines 55. The output from adder 82 connects on lines 49 as the input to the second waveguide 77.

In FIG. 18, the waveguide 76 includes the top rail delay 65-1 and the bottom rail delay 66-1 and a terminator 67-1. Similarly, the second waveguide 77 includes a top rail delay 65-2 and a bottom rail delay 66-2 and a terminator 67-2.

In the case of a violin in which the long string portion is approximately one foot and the short string portion is one-fifth of a foot, the waveguides of FIG. 18 are as follows. The terminator 67-1 is merely an inverter which changes the sign of the first rail value from delay 65-1 going into the delay 66-1. For example, the changing the sign is a 2's complement operation in digital arithmetic. Each of the delays 65-1 and 66-1 is the equivalent of about fifty samples in length for samples at a 50 KHz frequency. The terminator 67-2 in the waveguide 77 is typically ten samples of delay at the 50 KHz sampling rate. The terminator 67-2 can be a single pole low-pass filter. Alternatively, the terminator can be a filter having the empirically measured bridge reflectance cascaded with all sources of attenuation and dispersions for one round trip on the string.

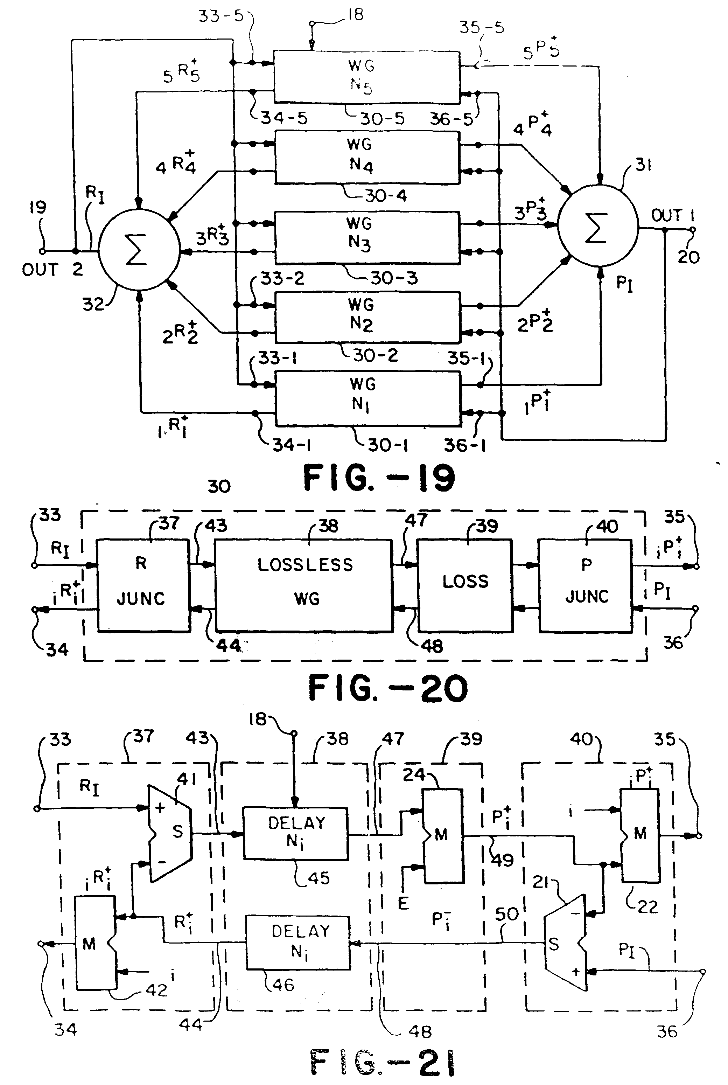

## Reverberator - FIG. 19

One lossless reverberator is augmented as shown in FIG. 19 by one or more simple loss factors (typically of the form $1-2^{-n}$) in waveguides 30 to set the reverberation decay times to any desired values. The time, $T_{60}$, over which the reverberation decays 60 dB is arbitrary. This decoupling of reverberation time from structure incurs no loss of generality in the present invention.

Some of the waveguides 30 of the network are determined to give specific early reflections, while others are chosen to provide a desirable texture in the late reverberation. An optimality criterion for the late reverberation is to maximize homogeneity of the impulse response by making it look like exponentially decaying white noise.

The waveguide networks allow every signal path to appear as a feedback branch around every other signal path. This connectivity richness facilitates development of dense late reverberation. Furthermore, the energy conserving properties of the waveguide networks can be maintained in the time-varying case which allows the breaking up of unwanted patterns in the late reverberation by subtly changing the reverberator in a way that does not modulate the reverberation decay profile. Finally, the explicit conservation of signal energy provides an easy way to completely suppress limit cycles and overflow oscillations.

In FIG. 19, one typical waveguide reverberator is shown including five waveguides (branches) formed by the waveguides 30-1, 30-2, ..., 30-5. The waveguides 30 are connected to junctions 31 and 32. The waveguides 30-1 through 30-5 have first rail inputs 33-1 through 33-5, respectively, have first rail outputs 35-1 through 35-5, respectively, have second rail inputs 36-1 through 36-5, respectively, and have second rail outputs 34-1 through 34-5, respectively. The first rail outputs 35-i, where i has values from 1 to 5, includes the output signals $\alpha_i P_i^+$, for i = 1 through 5. The outputs 35-i each connect to the summing node 31. Summing node 31 is an adder which adds all of the $\alpha_i P_i^+$ signals to form the junction pressure signal $P_I$. The $P_I$ signal connects in common to each of the second rail inputs 36-1 through 36-5. The $P_I$ signal at terminal 20 is typically used to provide an output from the reverberator of FIG. 19. In FIG. 19, the input 18 is typically connected to at least one of the waveguides 30 such as waveguide 30-5.

In FIG. 19, the waveguides 30-1 through 30-5 provide the second rail outputs 34-i for i = 1 to 5. The outputs 34-i provide the signals $\alpha_i R_i^+$ which in turn connect as inputs to the summing node 32. The summing node 32 sums all of the signals $\alpha_i R_i^+$ to form the node signal $R_I$ at terminal 19. A second output is typically taken from terminal 19. Additionally, the $R_I$ signal from summing node 32 connects in common to all of the first rail inputs 33-1 through 33-5.

Reverberator Waveguide - FIGS. 20 and 21

In FIG. 20, further details of the waveguides 30 of FIG. 19 are shown. Typically, each of the waveguides 30 in FIG. 19 includes an R junction 37, a lossless waveguide 38, a loss unit 39 and a P junction 40.

In FIG. 21, further details of the typical waveguide of FIG. 20 are shown. The R junction 37 includes a subtractor 41 and a multiplier 42. The subtractor 41 subtracts $R_i^+$ from the $R_I$ signal to provide the $R_i^-$ signal on line 43. The multiplier 42 multiplies the $R_i^+$ times a gain factor, $\alpha_i$, to provide the signal $\alpha_i R_i^+$ signal at output terminal 34-i.

The lossless waveguide 38 includes a lossless delay 45 and a lossless delay 46. The delay 45 delays by a delay, N. With the signal input to the delay on line 43 equal to $R_i^-(t)$, the delayed output signal on line 47 is equal to $R_i^-(t-N)$. Similarly the delay 46 delays the input signal $P_i^-(t)$ by N to form the delayed signal on line 44 equal by definition to $P_i^-(t-N)$, which is equal to the $R_i^+(t)$ signal.

In FIG. 21, the loss unit 39, includes a multiplier 24. Multiplier 24 multiplies the signal on line 47 by $\varepsilon$ to provide on the output the $P_i^+(t)$ signal equal to $\varepsilon R_i^-(t-N)$. While the loss circuit in the form of multiplier 24 has been inserted in the line 47, the loss circuit may alternatively be placed also in any one or more of the lines 43, 44, 47 or 48.

In FIG. 21, the P junction 40 typically includes a subtractor 21 and a multiplier 22. The subtractor 21 receives the $P_i^+$ signal and subtracts it from the junction pressure signal $P_I$ to produce the $P_i^-$ signal. Multiplier 22 multiplies the $P_i^+$ signal by $\alpha_i$ to form the $\alpha_i P_i^+$ signal.

In summary, the reverberator of FIGS. 19-21 consists of waveguides 30-1 through 30-5 connected together to form an arbitrary network. The waveguides 30-1 through 30-5 can be referred to as "branches" and their points of intersection 31 and 32 as "junctions" or "nodes".

Reflections are created by a mismatch between the admittances $\Gamma_i$ of the intersecting waveguides. The admittance is the inverse of the characteristic impedance $Z_i$. Setting the waveguide admittances all equal is acceptable as long as the waveguide delays $N_i$ are different. Equal characteristic admittances means that when a signal comes into a junction of waveguides, it will be split equally into all outgoing waveguides. In the reverberator of FIG. 19, equal characteristic admittances result in $\alpha_i = 2/5$ for all i. Choosing a power of Z for the number of branches means $\alpha_i$ is a power of Z and can therefore be implemented in binary arithmetic by means of a shift operation.

If a waveguide with small admittance connects to a waveguide of much higher admittance, the pressure wave will be partially reflected with a sign reversal. In the limit:

a pressure wave is completely reflected with a sign reversal when it encounters an admittance which is infinitely larger than the one in which it was traveling;

a pressure wave is completely reflected with no sign reversal when it encounters an admittance which is infinitely smaller than the one in which it was traveling;

a pressure wave is not reflected at all (complete transmission) when it encounters an admittance which is the same as the one in which it was traveling in, the "matched-impedance" case.

Time-Varying Reverberation

The effect of amplitude modulation of a waveguide admittance is to vary the admittance away from its original value. In order for the network to remain lossless, the sum of incoming scattering coefficients [$\alpha_i$ of Eq.(2)] must equal 2. Let $\Gamma_i(t)$ denote the time-varying branch admittances. Then from Eq.(2)

$$\alpha_i(t) = (2\Gamma_i(t)) / (\sum_{i=1}^{N} \Gamma_i(t))$$

and

$$\sum_{i=1}^{N} \alpha_i(t) = 2$$

at all times.
The objective is to vary $\alpha_i(t)$ in a complex waveguide network such that

$$\sum_{i=1}^{N} \alpha_i(t) = 2 \quad \text{and} \quad \alpha_i(t) = 2\Gamma_i(t) / \sum_{i=1}^{N} \Gamma_i(t)$$

for some waveguide admittance values $\Gamma_i(t)$.
The easiest case is the two-junction network such as shown in FIG. 19. In this case, the $\alpha_i(t)$ are identical at the two junctions.
One time-varying reverberation technique in the two-junction case is to vary the $\Gamma_1$ such that

$$\sum_{i=1}^{N} \Gamma_i = c$$

for some constant c. Then

$$\alpha_i(t) = 2\Gamma_i(t)/c, \quad \text{and} \quad \sum_{i=1}^{N} \alpha_i(t) = 2$$

as c. Then

$$\alpha_i(t) = 2\Gamma_i(t)/c, \quad \text{and} \quad \sum_{i=1}^{N} \alpha_i(t) = 2$$

as required for losslessness of the network. A special case is where $\Gamma_i + \Gamma_j = c_i$ in pairs. Another method for the time varying case is, at each junction, to provide one "reflection-free port" (RFP). Such a port is created when the admittance of one waveguide (that connected to the RFP) is equal to the sum of the admittances of all other waveguides meeting at that junction. In this implementation, the waveguide of the RFP has admittance 1, and it does not vary with time. We call this a "special" waveguide. Since every waveguide must connect to exactly two junctions, a special waveguide provides a RFP at two different junctions simultaneously. (A special waveguide is not very useful as a self-loop at some junction due to the next constraint.)

Given a reflection-free port caused by a special waveguide of admittance 1, the sum of the remaining waveguide admittances is 1. Since the waveguide connected to the reflection-free port is time-invariant, the sum of all time-varying admittances will be 1.

A simple method for time-varying reverberation using a RFP is to pair off the time-varying waveguides so that their admittances sum to 1 in pairs. This pairing is handy because a pair is the smallest number of mutually constrained waveguides that can be arranged. When there are more than two nodes (junctions), simple complementary pairing of time-varying junctions may be difficult.

Musical Instrument - FIG. 22

In FIG. 22, a typical musical instrument, that is signal processor, according to the present invention is shown. In FIG. 22, a processor 85, such as a special purpose or general purpose computer, generates a digital signal representing the sound to be produced or a control variable for a synthesizer. Typically, the processor 85 provides an address for a random access memory such as memory 86. Memory 86 is addressed and periodically provides a digital output representing the sound or control variable to be generated. The digital sample from the memory 86, typically at a sampling rate $T_s$ (usually near 50KHz), is connected to the waveguide unit 87. Waveguide unit 87 processes the digital signal in accordance with the present invention and provides an output to the digital-to-analog (D/A) converter 88. The converter 88 in turn provides an analog output signal through a filter 89 which connects to a speaker 90 and produces the desired sound.

When the signal processor of FIG. 22 is a reed instrument, the structure of FIGS. 15, 16 and 17 is typically employed for waveguide unit 87. In FIG. 15, the control variable 51 is derived from the processor 85 and the memory 86 of FIG. 22. The structure of FIGS. 15, 16 and 17 for a clarinet uses the FIG. 17 structure for waveguide 53 with a simple inverter (-1) for terminator 67. For a saxophone, the waveguide 53 is more complex, like FIG. 4.

When the signal processor of FIG. 22 is a bowed-string instrument, the waveguide unit 87 in FIG. 22 typically employs the structure of FIG. 18. The control variable input to register 51' of FIG. 18 comes from the memory 86 of FIG. 22. The output from the waveguide unit of FIG. 18 is derived from a number of different points, for example, from the terminals 54 and 55 for the waveguide 76 or from the terminals 49 and 50 from the waveguide 77 of FIG. 18. In one typical output operation, an adder 71 adds the signals appearing at terminals 49 and 50 to provide an input at terminal 20 to the D/A converter 88 of FIG. 22. The sum of the signals in adder 71 corresponds to the string velocity at the location of the bow on the instrument.

When reed and other instruments are employed, it has been found useful to introduce white noise summed with the control variable input to register 51' of FIG. 16. Additionally, the introduction of tremolo and other musical effects into the control variable enhances the quality of the sound produced.

When the waveguide unit 87 of FIG. 22 is a digital reverberator, the waveguide of FIG. 19 is typical with the parameters of TABLE 1.

Attention is directed to EP-A-0248527 from which the present invention is divided and which contains claims directed to the reverberation systems described above per se.

## TABLE 1

$$N_1 T_s = 5 \text{ ms.}$$
$$N_2 T_s = 17 \text{ ms.}$$
$$N_3 T_s = 23 \text{ ms.}$$
$$N_4 T_s = 67 \text{ ms.}$$
$$N_5 T_s = 113 \text{ ms.}$$
$$T_s \simeq 20 \text{ microseconds}$$
$$\epsilon = 0.9 \text{ where } |\epsilon| \leq 1$$
$$\sum_{i=1}^{5} \alpha_i = 2 \quad \text{(lossless condition)}$$
$$\text{where } 0 \leq \alpha_i \leq 2$$

For time-varying reverberation:
$$\alpha_1 = 1$$
$$\alpha_2 = \beta_1/2$$
$$\alpha_3 = (1-\beta_1)/2$$
$$0 \leq \beta_1 \leq 1$$
$$\alpha_4 = \beta_2/2$$
$$0 \leq \beta_2 \leq 1$$
$$\alpha_5 = (1-\beta_2)/2$$

## Claims

1. A real time tone generation system characterised by:

    means (51) for providing a variable control signal for initiating and thereafter controlling generation of a tone; wave transmission means (53) for transmitting wave signals, the wave transmission means including an input and an output, a first signal path for receiving signals from the input, a second signal path for providing signals to the output, the first signal path being coupled to the second signal path, and delay means (65,66) in at least one of the signal paths for delaying signals;

    junction means (52) having a first input (56) for receiving the control signal, a second input (55) for receiving a signal from the output of the wave transmission means (53) and an output (54) for providing a signal as the input to the wave transmission means which is a function of at least the value of the control signal and the value of the signal received from the output of the wave transmission means (53) so as to cause a tone signal to propagate in the wave transmission means (53); and

    tone signal extracting means for extracting a tone signal from at least one of the wave transmission means and junction means.

2. A tone generation system as claimed in claim 1 including coupling means (67) for at least partially coupling signals from the first path to the second path.

3. A tone generation system as claimed in claim 2 wherein the coupling means includes means (73) for blocking d. c. signals.

4. A tone generation system as claimed in claim 2 or 3 wherein the coupling means couples less than all of the signal from the first path to the second path.

5. A tone generation system as claimed in claim 2, 3 or 4 wherein said coupling means includes a low pass filter.

6. A tone generation system as claimed in any of claim 2 to 5 wherein said coupling means includes means (72) for inverting signals.

7. A tone generation system as claimed in claim 6 wherein the coupling means includes means (72) for filtering signals passing therethrough.

8. A tone generation system as claimed in any of claims 2 to 7 wherein the coupling means includes gain control means for controlling gain of signals passing therethrough.

9. A tone generation system as claimed in claim 8 wherein the gain control means controls gain in accordance with a preselected tone colour.

10. A tone generation system as claimed in any preceding claim wherein the junction means (52) includes conversion means for converting the signal from the second path in accordance with a conversion characteristic and switching means for selecting the conversion characteristic in accordance with the value of the control signal.

11. A tone generation system as claimed in any preceding claim wherein the junction means includes non-linear conversion means which receives the signal from the second path and converts it to the signal provided to the first path in accordance with a non-linear characteristic.

12. A tone generation system as claimed in claim 11 wherein the non-linear conversion means includes table means (59) for storing values representative of the non-linear characteristic and addressing means (58) for addressing the table means in accordance with the values of the control signal and the signal from the second path (55), wherein the output of the table means is employed to generate the output of the junction means.

13. A tone generation system as claimed in claim 12 wherein the addressing means (58) receives the control signal and the signal from the second path (55) and addresses the table means (59) in accordance with the difference between the signals.

14. A tone generation system as claimed in claim 12 wherein the table means (59) stores compressed data and further including modification means (62) for modifying the compressed data read out from the table means to provide the output of the junction means.

15. A tone generation system as claimed in claim 14 wherein the table means stores data of a predetermined number of bits and wherein the modification means (62) includes means for operating on the output of the table means (59) to provide expanded data of a number of bits greater than the predetermined number of bits.

16. A real time tone generation system as claimed in any of claims 1 to 9 comprising:

   at least first and second wave transmission means (76,77), each including an input (54,49) and an output (55,50), a first signal path for receiving signals from the input, a second signal path for providing signals to the output, coupling means (67-1,67-2) for coupling signals
   from the first path to the second path, and delay means (65,66) in at least one of the signal paths for delaying signals propagating therethrough.

17. A tone generation system as claimed in claim 16 wherein the junction means includes operating means for processing the signal at the second input as a function of the control signal to provide an operation result to the output of the junction means.

18. A tone generation system as claimed in claim 17 wherein the operating means includes adding means (80) for adding signals from the outputs of the first and second wave transmission means to provide an addition signal, the junction means providing at least one output signal whose value is a function of the control signal and the addition signal.

19. A tone generation system as claimed in claim 18 wherein the operating means includes subtracting means (57) for subtracting the addition signal from the control signal to obtain a subtraction signal, the junction means providing at least one output signal whose value is a function of the subtraction signal.

20. A tone generation system as claimed in any of claim 16 to 19 wherein said junction means has a plurality of second inputs each of which is connected to the output of a wave transmission means, and a plurality of outputs each of which is connected to the input of a wave transmission means, the junction means providing outputs whose values are functions of the values of the control signal and the outputs of the wave transmission means, said control signal causing periodic signals to be generated and propagate in the wave transmission means.

21. A tone generation system as claimed in claim 19 further including table means (70) for providing an output from a predetermined table in response to the subtraction signal, the junction means providing outputs whose values are functions of the output from the table.

22. A tone generation system as claimed in claim 21 further including plural output adding means (81,82) each having an output to a wave transmission means (76,77), each adding means for adding the output from the table (70) with the output of at least one wave transmission means other than the one to which the output of the respective output adding means is connected, the outputs of the output adding means forming the outputs of the junction means.

23. A tone generation system as claimed in any preceding claim wherein the coupling means includes means for introducing a loss into signals passing therethrough.

24. A tone generation system as claimed in any preceding claim wherein there are two wave transmission means each providing a predetermined amount of delay in order to provide a desired frequency content in the musical tone signal.

25. A tone generation system as claimed in any preceding claim wherein the system simulates a bowed string instrument and wherein the control signal represents bow velocity.

26. A tone generation system as claimed in claim 25 including means for providing a control signal which varies with time to represent bow velocity.

27. A real time tone generation system as claimed in any preceding claim wherein said wave transmission means comprises:

a plurality of wave transmission sections each having a first end and a second end, a first signal path for propagating signals from the first end to the second end and a second signal path for propagating signals from the second end to the first end, wherein each wave transmission section includes at least one delay element in at least one of its signal paths and said junction means is connected to the first end of a first wave transmission section; and
at least one cascade junction connected to a first end of one wave transmission section and a second end of another wave transmission section so as to interconnect the wave transmission sections in a cascade fashion, the or each cascade junction receiving signals from the wave transmission sections connected to it and partially transmitting the signals from one wave transmission section to the other wave transmission section and partially reflecting the signals back to the wave transmission section from which the signals were received; and coupling means are provided connected to the second end of a last wave transmission section for at least partially coupling signals from the first signal path to the second signal path of the last wave transmission section; and said tone signal extracting means are arranged to extract a signal from at least one point in the cascaded wave transmission section and junction combination to provide a musical tone signal which is created and propagated within the wave transmission sections in response to the control signal.

28. A tone generation system as claimed in claim 27 including means for controlling the transmission and reflection characteristics of at least one additional junction to control the pitch of the musical tone signal.

29. A tone generation system as claimed in claim 27 or 28 wherein at least one of the additional junctions includes at least three ports including a first port connected to an end of one waveguide, a second port connected to an end of another waveguide and a third port, each of at least two ports from among the three ports having an input path to the junction and an output path from the junction, wherein a signal received at the input path of any particular port is partially transmitted to the output paths of the other ports and is partially reflected to the output path of the particular port.

**30.** A tone generation system as claimed in any preceding claim wherein the wave transmission means and junction means comprise signal processing means.

**Patentansprüche**

1. Realzeit-Tonerzeugungssystem, **gekennzeichnet durch:**

   Mittel (51) zum Schaffen eines variablen Steuersignals zum Einleiten und darauffolgendem Steuern der Erzeugung eines Tones;

   Wellenübertragungsmittel (53) zum Übertragen von Wellensignalen, welches Wellenübertragungsmittel einen Eingang und einen Ausgang, einen ersten Signalweg zum Empfangen von Signalen von dem Eingang, einen zweiten Signalweg zum Schaffen von Signalen zu dem Ausgang, wobei der erste Signalweg mit dem zweiten Signalweg gekoppelt ist, und Verzögerungsmittel (65, 66) in mindestens einem der Signalwege zum Verzögern von Signalen enthält;

   Verbindungsmittel (52) mit einem ersten Eingang (56) zum Empfangen des Steuersignals, einem zweiten Eingang (55) zum Empfangen eines Signals von dem Ausgang des Wellenübertragungsmittels (53) und einem Ausgang (54) zum Schaffen eines Signals als Eingangssignal zu dem Wellenübertragungsmittel, das eine Funktion mindestens des Wertes des Steuersignals und des Wertes des von dem Ausgang des Wellenübertragungsmittels (53) empfangenen Signals ist, um so die Fortpflanzung eines Tonsignals in dem Wellenübertragungsmittel (53) zu veranlassen, und

   Tonsignal-Ausziehmittel zum Ausziehen eines Tonsignals von mindestens einem von dem Wellenübertragungsmittel und dem Verbindungsmittel.

2. Tonerzeugungs-System nach Anspruch 1, welches Kopplungsmittel (67) zum mindestens teilweisen Koppeln von Signalen von dem ersten eg zu dem zweiten Weg enthält.

3. Tonerzeugungs-System nach Anspruch 2, bei dem das Kopplungsmittel Mittel (73) zum Sperren von Gleichstromsignalen enthält.

4. Tonerzeugungs-System nach Anspruch 2 oder 3, bei dem das Kopplungsmittel weniger als die Gesamtheit des Signals vom ersten Weg zu dem zweiten Weg koppelt.

5. Tonerzeugungs-System nach Anspruch 2, 3 oder 4, bei dem das Kopplungsmittel ein Tiefpaßfilter enthält.

6. Tonerzeugungs-System nach einem der Ansprüche 2 bis 5, bei dem das Kopplungsmittel Mittel (72) zum Invertieren von Signalen enthält.

7. Tonerzeugungs-System nach Anspruch 6, bei dem das Kopplungsmittel Mittel (72) zum Filtern dort hindurchtretender Signale enthält.

8. Tonerzeugungs-System nach einem der Ansprüche 2 bis 7, bei dem das Kopplungsmittel Gewinn-Steuermittel zum Steuern des Gewinns dort hindurchtretender Signale enthält.

9. Tonerzeugungs-System nach Anspruch 8, bei dem das Gewinn-Steuermittel den Gewinn gemäß einer vorgewählten Tonfärbung steuert.

10. Tonerzeugungs-System nach einem der vorangehenden Ansprüche, bei dem das Verbindungsmittel (52) Wandlermittel zum Wandeln des Signals von dem zweiten Weg gemäß einer Wandlungs-Charakteristik und Schaltermittel zum Wählen der Wandlungs-Charakteristik gemäß dem Wert des Steuersignals enthält.

**11.** Tonerzeugungs-System nach einem der vorangehenden Ansprüche, bei dem das Verbindungsmittel nichtlineares Wandlermittel enthält, welches das Signal von dem zweiten Weg empfängt und es gemäß einer nichtlinearen Charakteristik in das dem ersten Weg zugeführte Signal wandelt.

**12.** Tonerzeugungs-System nach Anspruch 11, bei dem das nichtlineare Wandlermittel Tabellenmittel (59) zum Speichern von Werten enthält, die für die nichtlineare Charakteristik repräsentativ sind, und Adressiermittel (58) zum Adressieren des Tabellenmittels gemäß den Werten des Steuersignals und des Signals von dem zweiten Weg (55), wobei das Ausgangssignal des Tabellenmittels zum Erzeugen des Ausgangssignals des Verbindungsmittels benutzt wird.

**13.** Tonerzeugungs-System nach Anspruch 12, bei dem das Adressiermittel (58) das Steuersignal und das Signal von dem zweiten Weg (55) empfängt und das Tabellenmittel (59) gemäß der Differenz zwischen den Signalen adressiert.

**14.** Tonerzeugungs-System nach Anspruch 12, bei dem das Tabellenmittel (59) komprimierte Daten speichert und weiter Modifizierungsmittel (62) zum Modifizieren der von dem Tabellenmittel ausgelesenen komprimierten Daten enthält, um das Ausgangssignal des Verbindungsmittels zu schaffen.

**15.** Tonerzeugungs-System nach Anspruch 14, bei dem das Tabellenmittel Daten mit einer vorgegebenen Anzahl von Bits speichert, und bei dem das Modifizierungsmittel (62) Mittel zum Bearbeiten des Ausgangssignals des Tabellenmittels (59) enthält, um erweiterte Daten mit einer Anzahl von Bits zu schaffen, die größer als die vorgegebene Anzahl von Bits ist.

**16.** Realzeit-Tonerzeugungs-System nach einem der Ansprüche 1 bis 9, welches umfaßt:
mindestens erste und zweite Wellenübertragungsmittel (76, 77), die jeweils einen Eingang (54, 49) und einen Ausgang (55, 50) enthalten, einen ersten Signalweg zum Aufnehmen von Signalen von dem Eingang, einen zweiten Signalweg zum Schaffen von Signalen zu dem Ausgang, Kopplungsmittel (67-1, 67-2) zum Koppeln von Signalen von dem ersten Weg zu dem zweiten Weg, und Verzögerungsmittel (65, 66) in mindestens einem der Signalwege zum Verzögern von sich dort hindurch fortpflanzenden Signalen.

**17.** Tonerzeugungs-System nach Anspruch 16, bei dem das Verbindungsmittel Betätigungsmitel zum Verarbeiten des Signals an dem zweiten Eingang als eine Funktion des Steuersignals enthält, um ein Bearbeitungsergebnis zu dem Ausgang des Verbindungsmittels zu schaffen.

**18.** Tonerzeugungs-System nach Anspruch 17, bei dem das Betätigungsmittel Addiermittel (80) zum Addieren von Signalen von den Ausgängen des ersten und des zweiten Wellenübertragungsmittels enthält, um ein Additionssignal zu schaffen, wobei das Verbindungsmittel mindestens ein Ausgangssignal ergibt, dessen Wert eine Funktion des Steuersignals und des Additionssignals ist.

**19.** Tonerzeugungs-System nach Anspruch 18, bei dem das Betätigungsmittel Subtrahiermittel (57) zum Subtrahieren des Additionssignals von dem Steuersignal zum Erhalten eines Subtraktionssignals enthält, wobei das Verbindungssignal mindestens ein Ausgangssignal ergibt, dessen Wert eine Funktion des Subtraktionssignals ist.

**20.** Tonerzeugungs-System nach einem der Ansprüche 16 bis 19, bei dem das Verbindungsmittel eine Vielzahl von zweiten Eingängen besitzt, von denen jeder mit dem Ausgang eines Wellenübertragungsmittels verbunden ist, und eine Vielzahl von Ausgängen, von denen jeder mit dem Eingang eines Wellenübertragungsmittels verbunden ist, wobei das Verbindungsmittel Ausgangssignale schafft, deren Werte Funktionen der Werte des Steuersignals und der Ausgangssignale der Wellenübertragungsmittel sind, und das Steuersignal die Erzeugung periodischer Signale und ihre Fortpflanzung in dem Wellenübertragungsmittel veranlaßt.

**21.** Tonerzeugungs-System nach Anspruch 19, das weiter Tabellenmittel (70) zum Schaffen eines Ausgangssignals von einer vorgegebenen Tabelle in Reaktion auf das Subtraktionssignal enthält, wobei das Verbindungsmittel Ausgangssignale schafft, deren Werte Funktionen des Ausgangssignals von der Tabelle sind.

**22.** Tonerzeugungs-System nach Anspruch 21, das weiter eine Vielzahl von Ausgangsaddiermitteln (81, 82) enthält, von denen jedes einen Ausgang zu einem Wellenübertragungsmittel (76, 77) aufweist, wobei jedes Addiermittel zum Addieren des Ausgangssignals von der Tabelle (70) mit dem Ausgangssignal von mindestens einem Wellenübertragungsmittel dient, außer dem einen, mit denen das Ausgangssignal des jeweiligen Ausgangsaddiermittels verbunden ist, wobei die Ausgangssignale des Ausgangsaddiermittels die Ausgangssignale des Verbindungsmittels bilden.

23. Tonerzeugungs-System nach einem der vorangehenden Ansprüche, bei dem das Kopplungsmittel Mittel zum Einführen eines Verlust'es in dort hindurchtretende Signale enthält.

24. Tonerzeugungs-System nach einem der vorangehenden Ansprüche, bei dem zwei Wellenübertragungsmittel vorhanden sind, von denen jedes eine vorgegebene Verzögerungsgröße schafft, um einen gewünschten Frequenzgehalt in dem musikalischen Tonsignal vorzusehen.

25. Tonerzeugungs-System nach einem der vorangehenden Ansprüche, bei dem das System ein mit Bogen bearbeitetes Streichinstrument simuliert, und bei dem das Steuersignal die Bogengeschwindigkeit darstellt.

26. Tonerzeugungs-System nach Anspruch 25 mit Mitteln zum Schaffen eines Steuersignals, welches sich mit der Zeit verändert, um die Bogengeschwindigkeit darzustellen.

27. Realzeit-Tonerzeugungs-System nach einem der vorangehenden Ansprüche, bei dem das Wellenübertragungsmittel umfaßt:

eine Vielzahl von Wellenübertragungs-Abschnitten, die jeweils ein erstes Ende und ein zweites Ende, einen ersten Signalweg zum Fortpflanzen von Signalen von dem ersten Ende zu dem zweiten Ende, und einen zweiten Signalweg zum Fortpflanzen von Signalen von dem zweiten Ende zu dem ersten Ende, wobei jeder Wellenübertragungs-Abschnitt mindestens ein Verzögerungselement in mindestens einem seiner Signalwege enthält und das Verbindungsmittel mit dem ersten Ende eines ersten Wellenübertragungs-Abschnitts verbunden ist; und

mindestens eine Kaskadenverbindung mit einem ersten Ende eines Wellenübertragungs-Abschnitts und einem zweiten Ende eines anderen Wellenübertragungs-Abschnitts so verbunden ist, dass die Wellenübertragungs-Abschnitte kaskadenförmig verbunden sind, die oder jede Kaskadenverbindung Signale von den daran angeschlossenen Wellenübertragungs-Abschnitten empfängt und teilweise die Signale von einem Wellenübertragungs-Abschnitt überträgt und teilweise die Signale zu dem Wellenübertragungs-Abschnitt zurück reflektiert, von dem die Signale erhalten wurden; und

an dem zweiten Ende eines letzten Wellenübertragungs-Abschnitts angeschlossene Kopplungsmittel vorgesehen sind, um mindestens teilweise Signale von dem ersten Signalweg zu dem zweiten Signalweg des letzten Wellenübertragungs-Abschnitts zu koppeln; und die Tonsignal-Ausziehmittel angeordnet sind, ein Signal von mindestens einer Stelle in dem kaskadierten Wellenübertragungs-Abschnitt und der Verbindungskombination zum Schaffen eines musikalischen Tonsignals in Reaktion auf das Steuersignal auszuziehen, das innerhalb der Wellenübertragungs-Abschnitte geschaffen und fortgepflanzt wird.

28. Tonerzeugungs-System nach Anspruch 27 mit Mitteln zum Steuern der Übertragungs- und Reflexions-Kenngrößen mindestens einer zusätzlichen Verbindung, um die Tonhöhe des musikalischen Tonsignals zu steuern.

29. Tonerzeugungs-System nach Anspruch 27 oder 28, bei dem mindestens eine der zusätzlichen Verbindungen mindestens drei Anschlüsse enthält, einschließlich eines ersten Anschlusses, der mit einem Ende eines Wellenleiters verbunden ist, eines zweiten Anschlusses, der mit einem Ende eines anderen Wellenleiters verbunden ist und eines dritten Anschlusses, von denen jeder der letzten beiden Anschlüsse unter den drei Anschlüssen einen Eingangsweg zu der Verbindung und einen Ausgangsweg von der Verbindung besitzt, wobei ein an dem Eingangsweg irgendeines bestimmten Anschlusses empfangenes Signal teilweise zu den Ausgangswegen der anderen Anschlüsse übertragen und teilweise zu dem Ausgangsweg des bestimmten Anschlusses reflektiert wird.

30. Tonerzeugungs-System nach einem der vorangehenden Ansprüche, bei dem das Wellenübertragungsmittel und das Verbindungsmittel Signalverarbeitungsmittel umfassen.

**Revendications**

1. Un système de génération de sons en temps réel caractérisé par :

des moyens (51) pour fournir un signal de commande variable pour déclencher et ensuite commander la génération d'un son;

des moyens de transmission d'ondes (53) pour transmettre des signaux sous forme d'ondes, les moyens de transmission d'ondes comprenant une entrée et une sortie, un premier chemin de signal pour recevoir des signaux provenant de l'entrée, un second chemin de signal pour fournir des signaux à la sortie, le premier chemin de signal étant couplé au second chemin de signal, et des moyens de retard (65, 66) dans l'un au moins des chemins de signal, pour retarder des signaux;

des moyens de jonction (52) ayant une première entrée (56) pour recevoir le signal de commande, une seconde entrée (55) pour recevoir un signal provenant de la sortie des moyens de transmission d'ondes (53) et une sortie (54) pour fournir un signal à titre de signal d'entrée pour les moyens de transmission d'ondes, qui est une fonction au moins de la valeur du signal de commande et de la valeur du signal qui est reçu à partir de la sortie des moyens de transmission d'ondes (53), pour faire en sorte qu'un signal de son se propage dans les moyens de transmission d'ondes (53); et

des moyens d'extraction de signal de son pour extraire un signal de son à partir des moyens de transmission d'ondes ou des moyens de jonction, ou des deux.

2. Un système de génération de sons selon la revendication 1, comprenant des moyens de couplage (67) pour coupler au moins partiellement des signaux du premier chemin vers le second chemin.

3. Un système de génération de sons selon la revendication 2, dans lequel les moyens de couplage comprennent des moyens (73) pour bloquer des signaux de composante continue.

4. Un système de géneration de sons selon la revendication 2 ou 3, dans lequel les moyens de couplage couplent moins de la totalité du signal du premier chemin vers le second chemin.

5. Un système de génération de sons selon la revendication 2, 3 ou 4, dans lequel les moyens de couplage comprennent un filtre passe-bas.

6. Un système de génération de sons selon l'une quelconque des revendications 2 à 5, dans lequel les moyens de couplage comprennent des moyens (72) pour inverser des signaux.

7. Un système de génération de sons selon la revendication 6, dans lequel les moyens de couplage comprennent des moyens (72) pour filtrer des signaux qui les traversent.

8. Un système de génération de sons selon l'une quelconque des revendications 2 à 7, dans lequel les moyens de couplage comprennent des moyens de commande de gain pour commander le gain de signaux qui les traversent.

9. Un système de génération de sons selon la revendication 8, dans lequel les moyens de commande de gain commandent le gain conformément à une tonalité acoustique présélectionnée.

10. Un système de génération de sons selon l'une quelconque des revendications précédentes, dans lequel les moyens de jonction (52) comprennent des moyens de conversion pour convertir le signal provenant du second chemin, conformément à une caractéristique de conversion, et des moyens de commutation pour sélectionner la caractéristique de conversion conformément à la valeur du signal de commande.

11. Un système de génération de sons selon l'une quelconque des revendications précédentes, dans lequel les moyens de jonction comprennent des moyens de conversion non linéaire qui reçoivent le signal provenant du second chemin et qui le convertissent pour donner le signal qui est appliqué au premier chemin, conformément à une caractéristique non linéaire.

12. Un système de génération de sons selon la revendication 11, dans lequel les moyens de conversion non linéaire comprennent une structure de table (59) pour enregistrer des valeurs représentatives de la caractéristique non linéaire, et des moyens d'adressage (58) pour adresser la structure de table conformément aux valeurs du signal de commande et du signal provenant du second chemin (55), et dans lequel le signal de sortie de la structure de table est employé pour générer le signal de sortie des moyens de jonction.

13. Un système de génération de sons selon la revendication 12, dans lequel les moyens d'adressage (58) reçoivent le signal de commande et le signal provenant du second chemin (55) et ils adressent la structure de table (59) conformément à la différence entre les signaux.

14. Un système de génération de sons selon la revendication 12, dans lequel la structure de table (59) enregistre des données compressées, et comprenant en outre des moyens de modification (62) pour modifier les données compressées qui sont lues dans la structure de table, pour fournir le signal de sortie des moyens de jonction.

15. Un système de génération de sons selon la revendication 14, dans lequel la structure de table enregistre des données d'un nombre de bits prédéterminé, et dans lequel les moyens de modification (62) comprennent des moyens pour travailler sur le signal de sortie de la structure de table (59) pour fournir des données développées ayant un nombre de bits supérieur au nombre de bits prédéterminé.

16. Un système de génération de sons en temps réel selon l'une quelconque des revendications 1 à 9, comprenant : au moins des premiers et seconds moyens de transmission d'ondes (76, 77), comprenant chacun une entrée (54, 49) et une sortie (55, 50), un premier chemin de signal pour recevoir des signaux provenant de l'entrée, un second chemin de signal pour fournir des signaux à la sortie, des moyens de couplage (67-1, 67-2) pour coupler des signaux du premier chemin vers le second chemin, et des moyens de retard (65, 66) dans l'un au moins des chemins de signal, pour retarder des signaux qui se propagent à travers eux.

17. Un système de génération de sons selon la revendication 16, dans lequel les moyens de jonction comprennent des moyens de traitement pour traiter le signal à la seconde entrée en fonction du signal de commande, pour fournir un résultat de traitement à la sortie des moyens de jonction.

18. Un système de génération de sons selon la revendication 17, dans lequel les moyens de traitement comprennent des moyens d'addition (80) pour additionner des signaux provenant des sorties des premiers et seconds moyens de transmission d'ondes, pour produire un signal d'addition, les moyens de jonction produisant au moins un signal de sortie dont la valeur est une fonction du signal de commande et du signal d'addition.

19. Un système de génération de sons selon la revendication 18, dans lequel les moyens de traitement comprennent des moyens de soustraction (57) pour soustraire le signal d'addition du signal de commande, afin d'obtenir un signal de soustraction, les moyens de jonction produisant au moins un signal de sortie dont la valeur est une fonction du signal de soustraction.

20. Un système de génération de sons selon l'une quelconque des revendications 16 à 19, dans lequel les moyens de jonction ont un ensemble de secondes entrées, chacune d'elles étant connectée à la sortie de l'un des moyens de transmission d'ondes, et un ensemble de sorties, chacune d'elles étant connectée à l'entrée de l'un des moyens de transmission d'ondes, les moyens de jonction produisant des signaux de sortie dont les valeurs sont des fonctions des valeurs du signal de commande et des signaux de sortie des moyens de transmission d'ondes, le signal de commande faisant en sorte que des signaux périodiques soient générés et se propagent dans les moyens de transmission d'ondes.

21. Un système de génération de sons selon la revendication 19, comprenant en outre une structure de table (70) pour produire un signal de sortie à partir d'une table prédéterminée, en réponse au signal de soustraction les moyens de jonction produisant des signaux de sortie dont les valeurs sont des fonctions du signal de sortie provenant de la table.

22. Un système de génération de sons selon la revendication 21, comprenant en outre plusieurs moyens d'addition de sortie (81, 82) ayant chacune une sortie connectée à l'un des moyens de transmission d'ondes (76, 77), chacun des moyens d'addition étant destinés à additionner le signal de sortie de la table (70) avec le signal de la sortie de l'un au moins des moyens de transmission d'ondes autre que celui auquel la sortie des moyens d'addition de sortie respectifs est connectée, les sorties des moyens d'addition de sortie formant les sorties des moyens de jonction.

23. Un système de génération de sons selon l'une quelconque des revendications précédentes, dans lequel les moyens de couplage comprennent des moyens pour introduire une perte dans des signaux qui ies traversent.

24. Un système de génération de sons selon l'une quelconque des revendications précédentes, dans lequel il y a deux moyens de transmission d'ondes produisant chacun une valeur de retard prédéterminée, afin de produire un contenu spectral désiré dans le signal de son musical.

**25.** Un système de génération de sons selon l'une quelconque des revendications précédentes, dans lequel le système simule un instrument à cordes frottées, et dans lequel le signal de commande représente la vitesse de l'archet.

**26.** Un système de génération de sons selon la revendication 25. comprenant des moyens pour produire un signal de commande qui varie au cours du temps pour représenter la vitesse de l'archet.

**27.** Un système de génération de sons en temps réel selon l'une quelconque des revendications précédentes, dans lequel les moyens de transmission d'ondes comprennent :

un ensemble de sections de transmission d'ondes, ayant chacune une première extrémité et une seconde extrémité, un premier chemin de signal pour propager des signaux à partir de la première extrémité vers la seconde extrémité, et un second chemin de signal pour propager des signaux à partir de la seconde extrémité vers la première extrémité, chaque section de transmission d'ondes comprenant au moins un élément de retard dans l'un au moins de ses chemins de signal, et les moyens de jonction étant connectés à la première extrémité d'une première section de transmission d'ondes; et
au moins une jonction en cascade connectée à une première extrémité d'une section de transmission d'ondes et à une seconde extrémité d'une autre section de transmission d'ondes, de façon à interconnecter en cascade les sections de transmission d'ondes, la jonction en cascade, ou chacune d'elles, recevant des signaux à partir des sections de transmission d'ondes qui lui sont connectées, et transmettant partiellement les signaux d'une section de transmission d'ondes vers l'autre section de transmission d'ondes, et réfléchissant partiellement les signaux en arrière vers la section de transmission d'ondes à partir de laquelle les signaux ont été reçus; et des moyens de couplage sont établis et connectés à la seconde extrémité d'une dernière section de transmission d'ondes, pour coupler au moins partiellement des signaux du premier chemin de signal vers le second chemin de signal de la dernière section de transmission d'ondes; et les moyens d'extraction de signal de son sont conçus pour extraire un signal à partir d'au moins un point dans la combinaison en cascade de la section de transmission d'ondes et de la jonction, pour produire un signal de son musical qui est créé et se propage dans les sections de transmission d'ondes en réponse au signal de commande.

**28.** Un système de génération de sons selon la revendication 27, comprenant des moyens pour commander les caractéristiques de transmission et de réflexion d'au moins une jonction supplémentaire, de façon à commander la hauteur du signal de son musical.

**29.** Un système de génération de sons selon la revendication 27 ou 28, dans lequel l'une au moins des jonctions supplémentaires comprend au moins trois accès, comprenant un premier accès connecté à une extrémité d'un guide d'ondes, un second accès connecté à une extrémité d'un autre guide d'ondes et un troisième accès, chacun d'au moins deux accès parmi les trois accès ayant un chemin d'entrée dirigé vers la jonction et un chemin de sortie provenant de la jonction, et dans lequel un signal reçu sur le chemin d'entrée de n'importe quel accès particulier est transmis partiellement vers les chemins de sortie des autres accès, et est réfléchi partiellement vers le chemin de sortie de l'accès particulier.

**30.** Un système de génération de sons selon l'une quelconque des revendications précédentes, dans lequel les moyens de transmission d'ondes et les moyens de jonction comprennent des moyens de traitement de signal.

FIG. — 1

FIG. — 2

FIG. — 3

FIG. -4

FIG. -5

FIG. -6

FIG. -7

FIG. — 8

UPPER RAIL PORTION OF PIPELINE

LOWER RAIL PORTION OF PIPELINE

FIG. — 9

FIG. — 10

FIG. — 11

FIG. — 12

FIG — 13

FIG. — 14

FIG. -15

FIG. - 16

FIG. - 17

FIG. —18

FIG. -19

FIG. -20

FIG. -21

FIG.-22

FIG.-23

FIG.-24